(19) Europäisches Patentamt / European Patent Office / Office européen des brevets

(11) **EP 3 899 449 B1**

## (12) EUROPÄISCHE PATENTSCHRIFT

(45) Veröffentlichungstag und Bekanntmachung des Hinweises auf die Patenterteilung:
**20.09.2023 Patentblatt 2023/38**

(21) Anmeldenummer: **19808765.2**

(22) Anmeldetag: **21.11.2019**

(51) Internationale Patentklassifikation (IPC):
**G01F 1/84** (2006.01)     **G01F 25/10** (2022.01)
**G01F 25/00** (2022.01)

(52) Gemeinsame Patentklassifikation (CPC):
**G01F 1/8427; G01F 1/8436; G01F 25/10**

(86) Internationale Anmeldenummer:
**PCT/EP2019/082041**

(87) Internationale Veröffentlichungsnummer:
**WO 2020/126283 (25.06.2020 Gazette 2020/26)**

(54) **CORIOLIS-MASSENDURCHFLUSSMESSER**

CORIOLIS MASS FLOW METER

DISPOSITIF DE MESURE DU DÉBIT MASSIQUE DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133117**

(43) Veröffentlichungstag der Anmeldung:
**27.10.2021 Patentblatt 2021/43**

(73) Patentinhaber: **Endress + Hauser Flowtec AG**
**4153 Reinach (CH)**

(72) Erfinder:
• **LALLA, Robert**
**79541 Lörrach (DE)**
• **RIEDER, Alfred**
**84032 Landshut (DE)**
• **ANKLIN, Martin Josef**
**4143 Dornach (CH)**
• **HUBER, Reinhard**
**79713 Bad Säckingen (DE)**

(74) Vertreter: **Hahn, Christian et al**
**Endress+Hauser Group Services**
**(Deutschland)AG +Co. KG**
**Colmarer Straße 6**
**79576 Weil am Rhein (DE)**

(56) Entgegenhaltungen:
**EP-A1- 0 644 403    EP-A2- 0 919 793**
**CN-B- 104 236 651    US-A1- 2007 017 274**

**Beschreibung**

Die Erfindung betrifft ein Coriolis-Massendurchfluß-Meßgerät zum Messen eines Massenstroms eines fluiden Meßstoffs.

In der industriellen Meßtechnik werden - insb. auch im Zusammenhang mit der Regelung und Überwachung von automatisierten verfahrenstechnischen Prozessen - zur hochgenauen Ermittlung einer oder mehrerer Meßgrößen, beispielsweise eines Massenstroms und/oder einer Dichte, eines in einer Prozeßleitung, beispielsweise einer Rohrleitung, strömenden Meßstoffs, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Meßstoff durchströmten Meßaufnehmer vom Vibrationstyp gebildete Coriolis-Massendurchfluß-Meßgeräte verwendet.

Beispiele für solche, beispielsweise auch als Dichte- und/oder Viskositäts-Meßgeräte, ausgebildeten Coriolis-Massendurchfluß-Meßgeräte sind u.a. in der EP-A 564 682, der EP-A 816 807, der EP 0 644 403 A1, der

US-A 2002/0033043, der US-A 2006/0096390, der US-A 2007/0062309, der US-A 2007/0119264, der US-A 2008/0011101, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0178738, der US-A 2011/0219872, der US-A 2011/0265580, der US-A 2011/0271756, der US-A 2012/0123705, der US-A 2013/0042700, der US-A 2016/0071639, der US-A 2016/0313162, der US-A 2016/0187176, der US-A 2017/0003156, der US-A 2017/0261474, der US-A 44 91 009, der US-A 47 56 198, der US-A 47 77 833, der US-A 48 01 897, der US-A 48 76 898, der US-A 49 96 871, der US-A 50 09 109, der US-A 52 87 754, der US-A 52 91 792, der US-A 53 49 872, der US-A 57 05 754, der US-A 57 96 010, der US-A 57 96 011, der US-A 58 04 742, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 05 518, der US-B 65 13 393, der US-B 66 51 513, der US-B 66 66 098, der US-B 67 11 958, der US-B 68 40 109, der US-B 68 83 387, der US-B 69 20 798, der US-B 70 17 424, der US-B 70 40 181, der US-B 70 77 014, der US-B 71 43 655, der US-B 72 00 503, der US-B 72 16 549, der US-B 72 96 484, der US-B 73 25 462, der US-B 73 60 451, der US-B 76 65 369, der US-B 77 92 646, der US-B 79 54 388, der US-B 82 01 460, der US-B 83 33 120, der US-B 86 95 436, der WO-A 00/19175, der WO-A 00/34748, der WO-A 01/02812, der WO-A 01/02816, der WO-A 01/71291, der WO-A 02/060805, der WO-A 2005/050145, der WO-A 2005/093381, der WO-A 2007/043996, der WO-A 2008/013545, der WO-A 2008/059262, der WO-A 2009/148451, der WO-A 2010/099276, der WO-A 2013/092104, der WO-A 2014/151829, der WO-A 2016/058745, der WO-A 2017/069749, der WO-A 2017/123214, der WO-A 2017/137347, der WO-A 2017/143579, der WO-A 2018/160382,der WO-A 2018/174841, der WO-A 85/05677, der WO-A 88/02853, der WO-A 88/03642, der WO-A 89/00679, der WO-A 94/21999, der WO-A 95/03528, der WO-A 95/16897, der WO-A 95/29385, der WO-A 95/29386, der WO-A 98/02725, der WO-A 99/40 394, WO-A 2018/028932, der WO-A 2018/007176, der WO-A 2018/007185 oder der nicht vorveröffentlichten deutschen Patentanmeldung DE102018102831.8 beschrieben.

Der Meßaufnehmer eines jeden der darin gezeigten Coriolis-Massendurchfluß-Meßgeräte umfaßt wenigstens ein Vibrationselement, das typischerweise als ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Meßstoffs ausgebildet ist, oder das - wie u.a. auch in der WO-A 2018/160382, der US-A 2016/0187176 oder der vorbezeichneten Patentanmeldung DE102018102831.8 gezeigt - beispielsweise auch als ein innerhalb eines Lumens eines vom Meßstoff durchströmten Rohrs plaziertes Verdrängerelement ausgebildet sein kann. Das wenigstens eine Vibrationselement ist dafür eingerichtet, vom Meßstoff kontaktiert, beispielsweise nämlich vom Meßstoff durchströmt und/oder umströmt, und währenddessen vibrieren gelassen zu werden, insb. derart, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen, nicht zuletzt Coriolis-Massendurchfluß-Meßgeräten mit als Meßrohr ausgebildetem Vibrationselement, dienen typischerweise Biegeschwingungen auf einer natürlichen Resonanzfrequenz als Nutzschwingungen, beispielsweise solche Biegeschwingungen, die einem dem Meßaufnehmer immanenten natürlichen Biegeschwingungsgrundmode entsprechen, in dem die Schwingungen des Vibrationselements solche Resonanzschwingungen sind, die genau einen Schwingungsbauch aufweisen. Die Nutzschwingungen sind bei einem zumindest abschnittsweise gekrümmtem Meßrohr als Vibrationselement zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßaufnehmern mit einem geraden Meßrohr als Vibrationselement die Nutzschwingungen zumeist Biegeschwingungen in einer einzigen gedachten Schwingungsebene sind.

Es ist zudem bekannt, das wenigstens eine Vibrationselement, beispielsweise zwecks Durchführung wiederkehrender Überprüfungen des Meßaufnehmers während des Betriebs des Meßgeräts, gelegentlich auch zu zeitlich andauernden erzwungenen Schwingungen außer Resonanz anzuregen oder gelegentlich auch freie gedämpfte Schwingungen des wenigstens einen Vibrationselements zu ermöglichen sowie nämliche Schwingungen jeweils auszuwerten, etwa um, wie u.a. auch in der vorgenannten EP-A 816 807, US-A 2011/0178738 oder US-A 2012/0123705 beschrieben, allfällige Beschädigungen des wenigstens einen Vibrationselements möglichst frühzeitig zu detektieren, die eine unerwünschte Verringerung der Meßgenauigkeit und/oder der Betriebssicherheit des jeweiligen Meßgeräts bewirken können.

Bei Meßaufnehmern mit zwei jeweils als Meßrohr ausgebildeten Vibrationselementen sind diese zumeist über ein sich zwischen den Meßrohren und einem einlaßseitigen Anschlußflansch erstreckenden einlaßseitig Verteilerstück sowie über ein sich zwischen den Meßrohren und einem außlaßseitigen Anschlußflansch erstreckenden außlaßseitig Verteilerstück in die jeweilige Prozeßleitung eingebunden. Bei Meßaufnehmern mit einem einzigen Meßrohr als Vibrationselement kommuniziert letzteres zumeist über ein einlaßseitig einmündendes Verbindungsrohr sowie über ein auslaßseitig einmündendes Verbindungsrohr mit der Prozeßleitung. Ferner umfassen Meßaufnehmer mit einem einzigen Meßrohr als Vibrationselement jeweils wenigstens ein weiteres, nämlich als ein, beispielsweise rohr-, kasten- oder plattenförmigen, Gegenschwinger ausgebildetes, gleichwohl nicht vom Meßstoff kontaktiertes Vibrationselement, das unter Bildung einer ersten Kopplungszone einlaßseitig an das Meßrohr gekoppelt ist und der unter Bildung einer zweiten Kopplungszone auslaßseitig an das Meßrohr gekoppelt ist, und das im Betrieb im wesentlichen ruht oder entgegengesetzt zum Meßrohr oszilliert. Das dabei mittels Meßrohr und Gegenschwinger gebildete Innenteil des Meßaufnehmers ist zumeist allein mittels der zwei Verbindungsrohre, über die das Meßrohr im Betrieb mit der Prozeßleitung kommuniziert, in einem schutzgebenden Aufnehmer-Gehäuse gehaltert, insb. in einer Schwingungen des Innenteils relativ zum Aufnehmer-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßaufnehmern mit einem einzigen, im wesentlichen geraden Meßrohr sind letzteres und der Gegenschwinger, wie bei herkömmlichen Meßaufnehmern durchaus üblich, zueinander im wesentlichen koaxial ausgerichtet, indem der Gegenschwinger als im wesentlichen gerader Hohlzylinder ausgebildet und im Meßaufnehmer so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Vibrationselements, nicht zuletzt auch den vorbezeichneten Nutzschwingungen, weisen Meßaufnehmer vom Vibrationstyp des weiteren wenigstens einen im Betrieb auf das wenigstens eine Vibrationselement einwirkenden elektromechanischen, typischerweise ebenfalls elektrodynamischen Schwingungserreger auf. Der mittels eines Paars elektrischer Anschlußleitungen, beispielsweise in Form von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem in der Umformerschaltung vorgesehenen Antriebselektronik generierten und entsprechend konditionierten, nämlich zumindest an sich verändernde Schwingungseigenschaften des wenigstens einen Vibrationselemnts angepaßten elektrischen Treibersignal eine mittels nämlichen Treibersignals eingespeiste elektrische Erregerleistung in eine an einem vom Schwingungserreger gebildeten Angriffspunkt auf das wenigstens eine Vibrationselement wirkende Antriebskraft zu wandeln. Die Antriebselektronik ist im besonderen auch dafür eingerichtet, das Treibersignal mittels interner Regelung so einzustellen, daß es eine der anzuregenden, gelegentlich auch zeitlich ändernden Nutzfrequenz entsprechende Signalfrequenz aufweist, ggf. als bei einer durch einen Erregerstrom, nämlich einen elektrischen Strom des Treibersignals vorgegebenen Schwingungsamplitude. Das Treibersignal kann beispielsweise im Betrieb des Meßgeräts gelegentlich auch abgeschaltet werden, beispielsweise zwecks Ermöglichen der vorbezeichneten freien gedämpften Schwingungen des wenigstens einen Vibrationselements oder beispielsweise, wie in der eingangs erwähnten WO-A 2017143579 vorgeschlagen, um die Antriebselektronik vor einer Überlastung zu schützen.

Schwingungserreger marktgängiger Meßaufnehmer vom Vibrationstyp sind typischerweise nach Art einer nach dem elektrodynamischen Prinzip arbeitenden Luftspule, nämlich einer Luftspule-Magnet-Anordnung aufgebaut, die mittels einer - bei Meßaufnehmern mit einem Meßrohr und einem daran gekoppelten Gegenschwinger gebildeten Vibrationselementen zumeist an letzterem fixierten - Luftspule, nämlich einer keinen magnetischen Kern, sondern vielmehr Luft einschließenden Spule sowie einen mit der wenigstens einen Luftspule wechselwirkenden als Anker dienenden - beispielsweise entsprechend an vorbezeichnetem Meßrohr fixierten - Permanentmagneten gebildet ist und bei der die jeweilige Luftspule zumindest teilweise in einem einen Magnetischer Fluß führenden Luftspalt des Permanentmagneten positioniert ist. Permanentmagneten und Luftspule sind dabei üblicherweise so ausgerichtet, daß sie zueinander im wesentlichen koaxial verlaufen, und zudem dafür eingerichtet, relativ zueinander bzw. gegengleich bewegt zu werden, derart, daß bei durch die Luftspule fließendem Erregerstrom der Permanentmagnet und die in dessen Luftspalt befindliche Luftspule im wesentlichen translatorisch hin- und her bewegt werden. Zudem ist bei herkömmlichen Meßaufnehmern der Schwingungserreger zumeist so ausgebildet und plaziert, daß er im wesentlichen mittig an das wenigstens eine Meßrohr angreift. Alternativ zu einem eher zentral und direkt auf das wenigstens eine Vibrationselement wirkenden Schwingungserreger können, wie u.a. in der eingangs erwähnten US-A 60 92 429, beispielsweise auch mittels zweier nicht im Zentrum des wenigstens einen Vibrationselement, sondern eher ein- bzw. auslaßseitig an diesem fixierten Schwingungserreger zum aktiven Anregung mechanischer Schwingungen des wenigstens einen Vibrationselements verwendet werden oder, wie u.a. in der US-B 62 23 605 oder der US-A 55 31 126 vorgeschlagen, beispielsweise auch mittels eines zwischen dem wenigstens einen Vibrationselement und dem Aufnehmer-Gehäuse wirkenden Schwingungserreger gebildete Erregeranordnungen verwendet werden.

Aufgrund der Nutzschwingungen des wenigstens einen Vibrationselements, werden - nicht zuletzt auch für den Fall, daß die Nutzschwingungen des wenigstens einen Vibrationselements quer zur Strömungsrichtung auf den strömenden Meßstoff wirkende Biegeschwingungen sind - im Meßstoff bekanntlich auch vom momentanen Massenstrom abhängige Corioliskräfte induziert. Diese wiederum können vom Massenstrom abhängige, sich den Nutzschwingungen überlagernde Coriolisschwingungen des Vibrationselements, ebenfalls mit Nutzfrequenz, bewirken, derart, daß zwischen einlaßseitigen und auslaßseitigen Schwingungsbewegungen des die Nutzschwingungen ausführenden und zugleich vom Medium durchströmten wenigstens einen Meßrohrs eine auch vom Massenstrom abhängige, mithin auch als Maß für die Massendurchflußmessung nutzbare Laufzeit- bzw. Phasendifferenz detektiert werden kann. Bei einem zumindest abschnittsweise gekrümmtem Meßrohr als Vibrationselement, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr als Vibrationselement, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind.

Zum Erfassen sowohl einlaßseitiger als auch auslaßseitiger Schwingungsbewegungen des wenigstens einen Vibrationselements, nicht zuletzt auch den den Nutzschwingungen entsprechenden, und zum Erzeugen wenigstens zweier von der zu messenden Massenstrom beeinflußten elektrischen Schwingungsmeßsignalen weisen Meßaufnehmer der in Rede stehenden Art desweiteren zwei oder mehr entlang des wenigstens einen Vibrationselements voneinander beabstandete, beispielsweise jeweils mittels eines eigenen Paars elektrischer Anschlußleitungen mit eine in der vorbezeichneten Umformerschaltung elektrisch verbundenen, Schwingungssensoren auf. Jeder der Schwingungssensoren ist eingerichtet, die vorbezeichneten Schwingungsbewegungen an einem jeweiligen Meßpunkt zu erfassen und jeweils in ein nämliche Schwingungsbewegungen repräsentierendes elektrisches Schwingungsmeßsignal zu wandeln, das eine Nutzkomponente, nämlich eine (spektrale) Signal- bzw. nämlich eine Wechselspannungskomponente mit einer der Nutzfrequenz entsprechenden (Signal-)Frequenz und einer von der Nutzfrequenz und einem im jeweiligen Schwingungssensor etablierten magnetischer Fluß abhängigen (Signal-)Ampitude enthält, und nämliches Schwingungsmeßsignal jeweils der Umformerschaltung, beispielsweise nämlich einer mittels wenigstens eines Mikroprozessors gebildeten Meß- und Steuer-Elektronik der Umformerschaltung, zur weiteren, ggf. auch digitalen Verarbeitung zur Verfügung zu stellen. Zudem sind die wenigstens zwei Schwingungssensoren so ausgestaltet und angeordnet, daß die vorbezeichnete Nutzkomponente der damit generierten Schwingungsmeßsignale zudem jeweils einen vom Massenstrom abhängigen Phasenwinkel aufweisen, derart zwischen den Nutzkomponenten beider Schwingungsmeßsignale eine vom Massenstrom abhängige Laufzeit- bzw. Phasendifferenz meßbar ist. Basierend auf nämlicher Phasendifferenz ermittelt die Umformerschaltung bzw. deren Meß- und Steuer-Elektronik wiederkehrend den Massenstrom repräsentierende Massenstrom-Meßwerte. In Ergänzung zur Messung des Massenstroms kann - etwa basierend auf der Nutzfrequenz und/oder auf einer für die Anregung bzw. Aufrechterhaltung der Nutzschwingungen erforderlichen elektrischen Erregerleistung bzw. einer anhand dessen ermittelten Dämpfung der Nutzschwingungen - zusätzlich auch die Dichte und/oder die Viskosität des Mediums gemessen und von der Umformerschaltung zusammen mit dem gemessenen Massenstrom in Form qualifizierter Meßwerte ausgegeben werden. Typischerweise sind die beiden Schwingungssensoren als elektrodynamische Schwingungssensoren ausgebildet, insb. nämlich gleichermaßen wie der wenigstens eine Schwingungserreger jeweils mittels einer - hier als Tauchspule dienlichen - Luftspule-Magnet-Anordnung gebildet, bei der ebenfalls jeweils eine Luftspule zumindest teilweise in einem einen magnetischer Fluß führenden Luftspalt eines zugehörigen Permanentmagneten positioniert ("eingetaucht") ist und bei der zudem Luftspule und Permanentmagnet eingerichtet sind, zwecks Generierens einer Induktionsspannung relativ zueinander bewegt zu werden, derart, daß die Luftspule im Luftspalt im wesentlichen translatorisch hin- und her bewegt wird. Der Permanentmagnet und die Luftspule sind dabei üblicherweise so ausgerichtet, daß sie zueinander im wesentlichen koaxial verlaufen.

Es ist bekannt, daß bei Verwendung von elektrodynamischen Schwingungssensoren die vorbezeichneten Phasenwinkel der Nutzkomponenten jedes der Schwingungsmeßsignale trotz gleichbleibendem Massenstroms zeitlich ändern können bzw. daß die zwischen den Nutzkomponenten etablierte Phasendifferenz gelegentlich eine nicht vom Massenstrom abhängige Störkomponente aufweisen kann, derart, ein signifikanter Phasenfehler, nämlich eine nicht mehr vernachlässigbare zusätzliche Änderung der Phasendifferenz zu beobachten ist. Weiterführende Untersuchungen an konventionellen Coriolis-Massendurchfluß-Meßgeräten haben gezeigt, daß solche Phasenfehler im besonderen für auch den Fall auftreten können, daß das jeweilige Coriolis-Massendurchfluß-Meßgerät in der Nähe eines oder mehreren Elektromotoren, Transformatoren, Magneten, Wechselrichtern oder anderweitigen hohe elektrische Ströme, insb. auch Gleichströme, führenden Anlagenteilen stationiert, mithin einem gelegentlich auch sehr starken externen, nämlich von außerhalb des Coriolis-Massendurchfluß-Meßgeräts verursachten, gleichwohl sich auch innerhalb des Coriolis-Massendurchfluß-Meßgeräts ausbreitendes zusätzlichen Magnetfeld ausgesetzt ist.

Wie u.a. auch in der eingangs erwähnten WO-A 01/02812 oder US-B 76 65 369 erörtert, besteht eine Möglichkeit zur Reduzierung des vorbezeichneten, auf externe Magnetfelder zurückzuführenden Phasenfehlers beispielsweise darin, das Aufnehmer-Gehäuse durch die Verwendung von Materialien mit einer vergleichsweise hohen relativen magnetischen Leitfähigkeit, beispielsweise Automatenstahl oder Baustahl, so auszubilden, daß dessen effektiver magnetischer Widerstand signifikant verringert wird. Eine weitere Möglichkeit zur Vermeidung von durch externe Magnetfelder bedingten Meßfehlern bestünde, wie in der US-B 76 65 369 ebenfalls vorgeschlagen, auch darin, in den jeweiligen Magnetbechern der Schwingungssensoren die durch externe Magnetfelder hervorgerufenen Wirbelströme unterdrückende Schlitze vorzusehen. Untersuchungen haben allerdings gezeigt, daß die vorbezeichneten Maßnahmen zwar durchaus die in das Aufnehmer-Gehäuse eindringenden Magnetfelder schwächen und dadurch auch eine Beitrag zur Reduzierungen der vorbezeichneten Störkomponente leisten können, daß aber selbst durch eine Vereinigung beider Maßnahmen der Phasenfehler mit vertretbarem technischen Aufwand nicht immer unterhalb eines noch tolerierbaren Ausmaßes verringert werden kann. Im Ergebnis kann bei einem herkömmlichen Coriolis-Massendurchfluß-Meßgerät dementsprechend nicht ohne weiteres ausgeschlossen werden, daß der Massenstrom aufgrund eines unbekannten externen, ggf. auch lediglich vorübergehend etablierten und/oder schwankenden, Magnetfeldes unerkannt mit deutlich erhöhten Meßfehlern gemessen wird bzw. entsprechende Massenstrom-Meßwerte mit signifikant verringerter Meßgenauigkeit ausgegeben werden.

Ausgehend vom vorbezeichneten Stand der Technik besteht eine Aufgabe der Erfindung darin, Coriolis-Massendurchfluß-Meßgeräte dahingehend zu verbessern, daß damit auch die Anwesenheit eines exteren Magnetfelds bzw. dessen Einfluß auf die Meßgenauigkeit zumindest detektiert, beispielsweise auch zeitnah entsprechend vermeldet werden kann.

Zur Lösung der Aufgabe besteht die Erfindung in einem Coriolis-Massendurchfluß-Meßgerät, beispielsweise nämlich einem Coriolis-Massendurchfluß-/Dichte-Meßgerät, zum Messen eines Massenstroms eines fluiden Meßstoffs - beispielsweise eines Gases, einer Flüssigkeit oder einer Dispersion -, welches Coriolis-Massendurchfluß-Meßgerät einen Meßwandler, der wenigstens ein Vibrationselement, eine Erregeranordnung sowie eine Sensoranordnung aufweist und der eingerichtet ist, den Meßstoff zu führen, nämlich zumindest zeitweise vom Meßstoff durchströmt zu werden, sowie eine mit dem Meßwandler, nämlich sowohl mit dessen Erregeranordnung als auch dessen Sensoranordnung elektrisch gekoppelte, beispielsweise mittels wenigstens eines Mikroprozessors gebildete, elektronische Umformerschaltung umfaßt. Das wenigstens eine Vibrationselement ist eingerichtet, vom strömenden Meßstoff kontaktiert und währenddessen vibrieren gelassen zu werden und die Erregeranordnung ist eingerichtet, dorthin eingespeiste elektrische Leistung in erzwungene mechanische Schwingungen des Vibrationselements bewirkende mechanische Leistung zu wandeln. Die Umformerschaltung wiederum ist eingerichtet, ein elektrisches Treibersignal zu generieren und damit elektrische Leistung in die Erregeranordnung einzuspeisen, derart, daß das Vibrationselement zumindest anteilig Nutzschwingungen, nämlich erzwungene mechanische Schwingungen mit wenigstens einer Nutzfrequenz, nämlich einer durch das elektrische Treibersignal vorgegebenen, beispielsweise einer Resonanzfrequenz des Meßwandlers entsprechenden, Schwingungsfrequenz ausführt, die geeignet sind, im strömendem Meßstoff vom Massenstrom abhängige Corioliskräfte zu bewirken. Zum Erfassen mechanischer Schwingungen des wenigstens einen Vibrationselements, beispielsweise nämlich dessen Nutzschwingungen, weist die Sensoranordnung einen elektrodynamischen ersten Schwingungssensor und wenigstens einen, beispielsweise zum ersten Schwingungssensor baugleichen, elektrodynamischen zweiten Schwingungssensor auf. Der erste Schwingungssensor ist eingerichtet, Schwingungsbewegungen des wenigstens einen Vibrationselements an einem ersten Meßpunkt in ein elektrisches erstes Schwingungsmeßsignal der Sensoranordnung zu wandeln, derart, daß nämliches erstes Schwingungsmeßsignal wenigstens eine erste Nutzkomponente, nämlich eine Wechselspannungskomponente mit einer der Nutzfrequenz entsprechenden Frequenz, und mit einer von der Nutzfrequenz und einem ersten magnetischen Fluß, nämlich einem magnetischen Fluß durch den ersten Schwingungssensor abhängigen Amplitude aufweist, und der zweite Schwingungssensor ist eingerichtet, Schwingungsbewegungen des wenigstens einen Vibrationselements an einem vom ersten Meßpunkt entfernten zweiten Meßpunkt in ein elektrisches zweites Schwingungsmeßsignal der Sensoranordnung zu wandeln, derart, daß nämliches zweites Schwingungsmeßsignal wenigstens eine zweite Nutzkomponente, nämlich eine Wechselspannungskomponente mit einer der Nutzfrequenz entsprechenden Frequenz, und mit einer von der Nutzfrequenz und einem zweiten magnetischen Fluß, nämlich einem magnetischen Fluß durch den zweiten Schwingungssensor abhängigen Amplitude aufweist. Darüberhinaus ist die Umformerschaltung zudem auch dafür eingerichtet, die ersten und zweiten Schwingungsmeßsignale zu empfangen und auszuwerten, nämlich sowohl anhand der ersten und zweiten Schwingungsmeßsignale den Massenstrom repräsentierende, beispielsweise digitale, Massenstrom-Meßwerte zu ermitteln als auch Kennzahlenwerte für wenigstens eine, beispielsweise eine Funktionstüchtigkeit der Sensoranordnung und/oder eine zeitliche Veränderung der Sensoranordnung und/oder eine Abweichung der Sensoranordnung von einem Referenzzustand charakterisierende, erste Sensoren-Kennzahl zu berechnen, derart, daß nämliche Sensoren-Kennzahl eine, beispielsweise mittlere oder momentane, Änderungsrate, mit der sich zumindest eine der Amplituden der ersten und zweiten Nutzkomponenten, beispielsweise nämlich ein Unterschied zwischen den Amplitude der ersten und zweiten Nutzkomponenten, zeitlich ändert, repräsentiert, beispielsweise nämlich von der Änderungsrate abhängig ist und/oder die Änderungsrate quantifiziert, und daß die Umformerschaltung eingerichtet ist, einen oder mehrere Kennzahlenwerte für die Sensoren-Kennzahl jeweils mit einem oder mehreren für die Sensoren-Kennzahl, beispielsweise vom Hersteller des Coriolis-Massendurchfluß-Meßgeräts und/oder bei der Herstellung des Coriolis-Massendurchfluß-Meßgerät, ermittelten Bezugswerten, beispielsweise einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten, zu vergleichen.

Nach einer Ausgestattung der Erfindung ist ferner vorgesehen, daß die Sensoren-Kennzahl eine, beispielsweise hinsichtlich eines jeweiligen Betrags, größte von zwei, beispielsweise mittleren oder momentanen, Änderungsraten repräsentiert, mit der die Amplituden der ersten und zweiten Nutzkomponenten zeitlich ändern.

Nach einer Ausgestaltung der Erfindung ist ferner vorgesehen, daß die Sensoren-Kennzahl eine, beispielsweise mittlere oder momentane, Änderungsrate repräsentiert, mit der ein Unterschied, beispielsweise nämlich eine Differenz, zwischen der Amplitude der ersten Nutzkomponente und der Amplitude der zweiten Nutzkomponente zeitlich ändert.

Nach einer Ausgestaltung der Erfindung ist ferner vorgesehen, daß die Sensor-Kennzahl eine, beispielsweise mittlere oder momentane, Änderungsrate repräsentiert, mit der eine, beispielsweise auf eine der Amplituden der ersten und zweiten Nutzkomponente normierte oder auf eine Summe der Amplituden ersten und zweiten Nutzkomponente normierte oder auf einen Mittelwert der Amplituden der ersten und zweiten Nutzkomponente normierte, Differenz zwischen den Amplituden der ersten und zweiten Nutzkomponenten zeitlich ändert.

Nach einer Ausgestaltung der Erfindung weiterbildend ist die Umformerschaltung ferner eingerichtet, zu ermitteln, ob eine oder mehrere Kennzahlenwerte für die Sensoren-Kennzahl größer als der wenigstens eine Bezugswert für die Sensoren-Kennzahl ist, beispielsweise nämlich falls ein oder mehrere Kennzahlenwerte für die Sensoren-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist, eine dies signalisierende Meldung auszugeben.

Nach einer Ausgestaltung der Erfindung ist ferner vorgesehen, daß die Umformerschaltung eingerichtet ist, anhand des, beispielsweise digitalisierten, ersten Schwingungsmeßsignals Kennzahlwerte für wenigstens eine erste Nutzkomponenten-Kennzahl, nämlich eine die erste Nutzkomponente charakterisierende und/oder von der Amplitude der ersten Nutzkomponente abhängige Kennzahl, beispielsweise nämlich einen Spitzenwert der ersten Nutzkomponente und/oder einen Effektivwert der ersten Nutzkomponente und/oder einen Gleichrichtwert der ersten Nutzkomponente und/oder eine Schwingungsbreite der ersten Nutzkomponente, zu ermitteln, beispielsweise nämlich Kennzahlwerte für die wenigstens eine Sensoren-Kennzahl unter Verwendung von für die erste Nutzkomponenten-Kennzahl ermittelte Kennzahlwerten zu berechnen.

Nach einer Ausgestaltung der Erfindung ist ferner vorgesehen, daß die Umformerschaltung eingerichtet ist, anhand des, beispielsweise digitalisierten, zweiten Schwingungsmeßsignals Kennzahlwerte für wenigstens eine zweite Nutzkomponenten-Kennzahl, nämlich eine die zweite Nutzkomponente charakterisierende und/oder von der Amplitude der zweiten Nutzkomponente abhängige Kennzahl, beispielsweise nämlich einen Spitze-Spitze-Wert der zweiten Nutzkomponente und/oder einen Effektivwert der zweiten Nutzkomponente und/oder einen Gleichrichtwert der zweiten Nutzkomponente und/oder eine Schwingungsbreite der zweiten Nutzkomponente, zu ermitteln, beispielsweise nämlich Kennzahlwerte für die wenigstens eine Sensoren-Kennzahl unter Verwendung von anhand von für die zweite Nutzkomponenten-Kennzahl ermittelten Kennzahlwerten zu berechnen.

Nach einer Ausgestaltung der Erfindung ist ferner vorgesehen, daß die Umformerschaltung einen nicht-flüchtigen elektronischen Datenspeicher aufweist, der dafür eingerichtet ist, digitale Daten, beispielsweise auch ohne eine angelegte Betriebsspannung, vorzuhalten, beispielsweise nämlich einen oder mehrere vorab ermittelte Bezugswerte für die Sensoren-Kennzahl zu speichern. Alternativ oder in Ergänzung ist ferner vorgesehen, daß im elektronischen Datenspeicher ein oder mehrere, beispielsweise vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Sensoren-Kennzahl, beispielsweise nämlich ein oder mehrere eine verminderte Funktionstüchtigkeit der Sensoranordnung repräsentierende Bezugswerte und/oder nämlich ein oder mehrere eine Fehlfunktion der Sensoranordnung repräsentierende Bezugswerte, gespeichert sind.

Nach einer Ausgestaltung der Erfindung ist ferner vorgesehen, daß die Umformerschaltung eingerichtet ist, einen die Ermittlung der Kennzahlenwerte für die erste Sensoren-Kennzahl zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl zumindest vorübergehend anzuhalten.

Nach einer Ausgestaltung der Erfindung ist ferner vorgesehen, daß die Sensoranordnung zum Erfassen einer Temperatur des Meßaufnehmers an einem Temperatur-Meßpunkt wenigstens einen Temperatursensor aufweist, der eingerichtet ist, ein Temperaturmeßsignal, nämlich ein die Temperatur am Temperatur-Meßpunkt repräsentierendes Meßsignal, beispielsweise mit einer von der Temperatur abhängigen elektrischen Spannung und/oder einem von der Temperatur abhängigen elektrischen Strom, bereitzustellen. Diese Ausgestaltung der Erfindung weiterbildend ist die Umformerschaltung ferner eingerichtet, auch das Temperaturmeßsignal zu empfangen und auszuwerten, nämlich die Kennzahlenwerte für die wenigstens eine Sensoren-Kennzahl auch anhand des Temperaturmeßsignals zu berechnen.

Nach einer Ausgestaltung der Erfindung ist ferner vorgesehen, daß die Umformerschaltung eingerichtet ist, anhand der ersten und zweiten Schwingungsmeßsignale Kennzahlenwerte für wenigstens eine, beispielsweise eine Funktionstüchtigkeit der Sensoranordnung und/oder eine zeitliche Veränderung der Sensoranordnung und/oder eine Abweichung der Sensoranordnung von einem Referenzzustand charakterisierende, zweite Sensoren-Kennzahl zu berechnen, derart, daß nämliche zweite Sensoren-Kennzahl einen Unterschied zwischen der Amplitude der ersten und zweiten Nutzkomponente repräsentiert, beispielsweise nämlich von dem Unterschied abhängig ist und/oder den Unterschied quantifiziert. Diese Ausgestaltung der Erfindung weiterbildend ist ferner vorgesehen, daß die zweite Sensor-Kennzahl eine, beispielsweise auf eine der Amplituden der ersten und zweiten Nutzkomponente normierte oder auf eine Summe der Amplituden ersten und zweiten Nutzkomponente normierte oder auf einen Mittelwert der Amplituden der ersten und zweiten Nutzkomponente normierte, Differenz zwischen den Amplituden der ersten und zweiten Nutzkomponenten repräsentiert.

Nach einer Ausgestaltung der Erfindung ist ferner vorgesehen, daß die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist.

Nach einer Ausgestaltung der Erfindung ist ferner vorgesehen, daß jede der ersten und zweiten Nutzkomponenten jeweils einen vom Massenstrom abhängigen Phasenwinkel aufweist. Diese Ausgestaltung der Erfindung weiterbildend ist die Umformerschaltung ferner eingerichtet, die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen.

Nach einer Ausgestaltung der Erfindung ist ferner vorgesehen, daß der erste Schwingungssensor mittels einer ersten Tauchspule und der zweite Schwingungssensor mittels einer zweiten Tauchspule gebildet ist.

Nach einer Ausgestaltung der Erfindung ist ferner vorgesehen, daß die Erregeranordnung zum Anregen von Schwingungen des wenigstens eine Meßrohrs einen, beispielsweise elektrodynamischen und/oder einzigen, Schwingungserreger aufweist.

Nach einer Ausgestaltung der Erfindung ist ferner vorgesehen, daß das wenigstens eine Vibrationselement mittels wenigstens eines, beispielsweise zumindest abschnittsweise geraden und/oder zumindest abschnittsweise kreisbogenförmigen, Rohrs mit einem von einer, beispielsweise metallischen, Rohrwand und einem davon umhüllten Lumen gebildet und dafür eingerichtet ist, von Meßstoff durchströmt und währenddessen vibrieren gelassen zu werden. Ein Grundgedanke der Erfindung besteht darin, gelegentlich durch externe Magnetfelder auftretende Beeinflussung der Sensoranordnung von Coriolis-Massendurchfluß-Meßgeräten anhand von damit einhergehenden Änderungen der Amplituden der Nutzkomponenten der von der Sensoranordnung bereitgestellten Schwingunsgmeßsignale zu detektieren. Die Erfindung beruht auf der überraschenden Erkenntnis, daß eine für die Meßgenauigkeit des Coriolis-Massendurchfluß-Meßgeräts relevante Einflußnahme eines externen Magnetfelds auf die Schwingungssensoren eines Coriolis-Massendurchfluß-Meßgeräts bzw. deren Schwingungsmeßsignale naturgemäß asymmetrisch ist und daß nicht zuletzt solche Änderungen in der zwischen den Schwingungssensoren bzw. deren Schwingungsmeßsignalen bestehenden Sensor-Asymmetrie regelmäßig auf eine Störung der Sensoranordnung durch eine externes Magnetfeld zurückzuführen sind, die mit ein dafür vorgegebenes Maß für eine entsprechende Änderungsrate übersteigen und/oder die nur vorübergehend auftreten.

Ein Vorteil der Erfindung besteht u.a. darin, daß damit eine Detektion von die Meßgenauigkeit von Coriolis-Massendurchfluß-Meßgeräten beeinträchtigenden externen Magnetfeldern auch bereits anhand der im Betrieb von Coriolis-Massendurchfluß-Meßgeräten ohnehin generierten Schwingungsmeßsignale durchgeführt werden kann. Dementsprechend kann die Erfindung in vorteilhafter Weise allein durch eine entsprechende Modifikation der typsicherweise re-programmierbaren Umformerschaltungen auch bei bereit installierten konventionellen Coriolis-Massendurchfluß-Meßgeräten ohne weiteres nachgerüstet werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:

Fig. 1      ein, hier als Kompakt-Meßgerät ausgebildetes, Coriolis-Massendurchfluß-Meßgerät;

Fig. 2      schematisch nach Art eines Blockschaltbildes eine, insb. auch für ein Coriolis-Massendurchfluß-Meßgerät gemäß den Fig. 1 geeignete, Umformerschaltung mit daran angeschlossenem Meßwandler vom Vibrationtyp bzw. ein Coriolis-Massendurchfluß-Meßgerät gemäß den Fig. 1;

Fig. 3      ein Phasor-Diagramm (Zeigerdiagramm mit ruhenden Zeigern) für Signalkomponenten von mittels eines Coriolis-Massendurchfluß-Meßgeräts gemäß Fig. 1 bzw. mittels einer an einen Meßwandler vom Vibrationstyp angeschlossenen Umformerschaltung gemäß Fig. 2 generierte Schwingungsmeßsignalen;

Fig. 4a, 4b  schematisch einen Schwingungssensor in einer geschnittenen Seitenansicht sowie Feldlinien eines den Schwingungssensor durchdringenden Magnetfelds;

Fig. 5a, 5b  schematisch einen weiteren Schwingungssensor in einer geschnittenen Seitenansicht sowie Feldlinien eines nämlichen Schwingungssensor durchdringenden Magnetfelds.

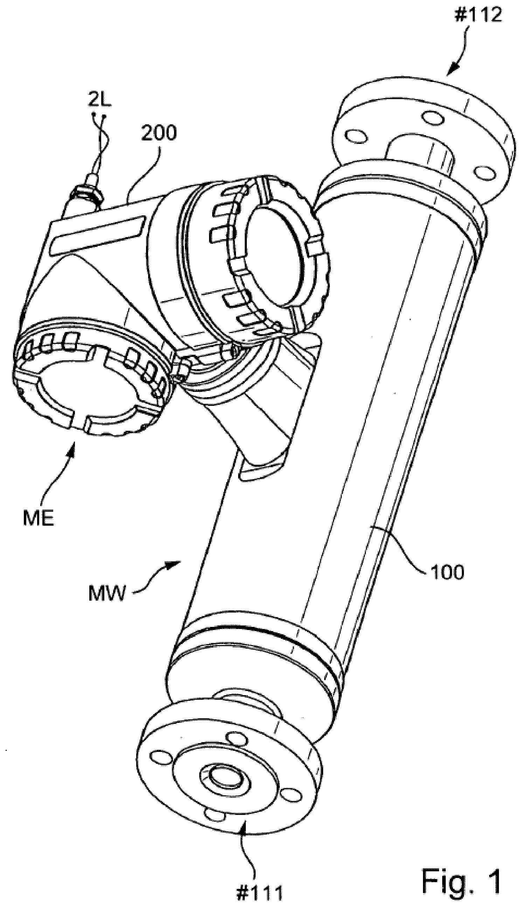

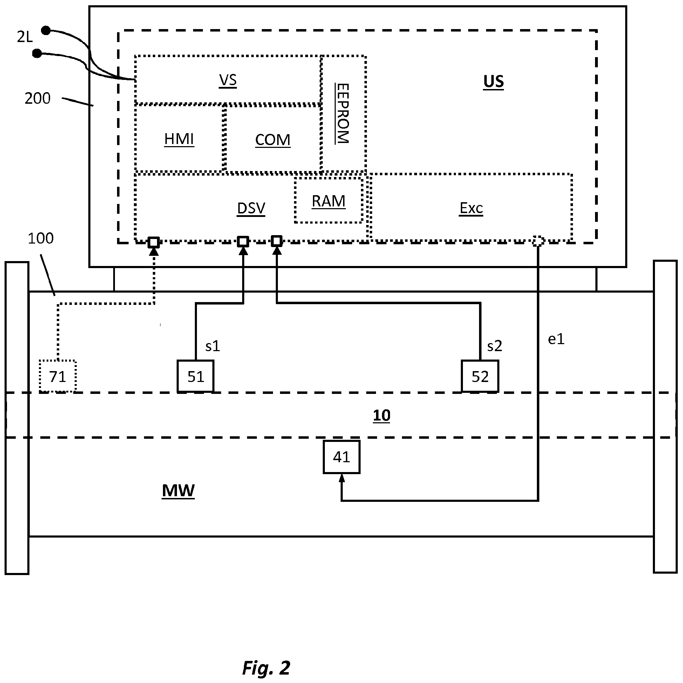

In der Fig. 1 bzw. 2 ist ein in eine (hier nicht dargestellte) Prozeßleitung - wie z.B. eine Rohrleitung einer industriellen Anlage, beispielsweise einer Abfüllanlagen oder einer Betankungsvorrichtung - einfügbares Coriolis-Massendurchfluß-Meßgerät für fließfähige, insb. fluide bzw. schüttfähige, Medien, beispielsweise nämlich auch eines zumindest zeitweise 2- oder mehrphasigen bzw. inhomogenen Meßstoffs, dargestellt. Das Coriolis-Massendurchfluß-Meßgerät dient im besonderen dem Messen und/oder Überwachen einer Massenstrom m bzw. dem Ermitteln von die Massenstrom repräsentierenden Massenstrom-Meßwerten eines in der vorbezeichneten Prozeßleitung geführten bzw. darin zumindest zeitweise strömen gelassenen fluiden Meßstoffs, beispielsweise nämlich eines Gases, einer Flüssigkeit oder einer Dispersion. Ferner kann das Coriolis-Massendurchfluß-Meßgerät dazu dienen, zusätzlich auch eine Dichte p und/oder eine Viskosität η, des Meßstoffs zu messen, beispielsweise nämlich die Dichte repräsentierende Dichte-Meßwerte und/oder die Viskosität repräsentierende Viskositäts-Meßwerte zu ermitteln und auszugeben. Nach einer Ausgestaltung der Erfindung ist vorgesehen, das Coriolis-Massendurchfluß-Meßgerät zum Ermitteln von Massendurchfluß-Meßwerten eines zu transferierenden, beispielsweise nämlich mit einer vorgegebenen bzw. vorgebbaren Menge von einem Lieferanten an einen Abnehmer zu übergebenden Meßstoffs zu verwenden, beispielsweise ein verflüssigtes Gas, wie z.B. ein Methan und/oder Ethan und/oder Propan und/oder Buthan enthaltendes Flüssiggas bzw. ein verflüssigtes Erdgas (LNG) oder auch ein mittels flüssiger Kohlenwasserstoffe gebildetes Stoffgemisch, beispielsweise nämlich ein Erdöl oder ein flüssiger Kraftstoff. Das Coriolis-Massendurchfluß-Meßgerät kann dementsprechend beispielsweise auch als Bestandteil einer Übergabestelle für eichpflichtigen Güterverkehr, wie etwa einer Betankungsanlage, und/oder als ein Bestandteil einer Übergabestelle, beispielsweise auch nach Art der in der erwähnten der WO-A 02/060805, der WO-A 2008/013545, der WO-A 2010/099276, der WO-A 2014/151829, der WO-A 2016/058745 gezeigten Übergabestellen, ausgebildet sein.

Das - beispielsweise auch als zusätzlich die Dichte messendes

Coriolis-Massendurchfluß-/Dichte-Meßgerät und/oder als zusätzlich die Viskosität messendes Coriolis-Massendurchfluß-/Viskosität-Meßgerät realisierte - Coriolis-Massendurchfluß-Meßgerät umfaßt einen über ein Einlaßende #111 sowie ein Auslaßende #112 an die Prozeßleitung angeschlossenen physikalisch-elektrischen Meßaufnehmer MW, der dafür eingerichtet ist, im Betrieb vom Meßstoff durchströmt zu werden, sowie eine damit elektrisch gekoppelte - insb. mittels wenigstens eines Mikroprozessors gebildete und/oder im Betrieb mittels interner Energiespeicher und/oder von extern via Anschlußkabel mit elektrischer Energie versorgte - elektronische Umformerschaltung US. Das elektrische Koppeln bzw. Anschließen des Meßaufnehmers MW an die Umformerschaltung US kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

In vorteilhafter Weise kann die, beispielsweise auch programmierbare und/oder fernparametrierbare, Umformerschaltung US ferner so ausgelegt sein, daß sie im Betrieb des Coriolis-Massendurchfluß-Meßgeräts mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten, beispielsweise auch Statusmeldungen, austauschen kann, wie etwa aktuelle Meßwerte oder der Steuerung des Meßsystems dienende Einstell- und/oder Diagnosewerte. Dementsprechend kann die Umformerschaltung US beispielsweise eine solche Sende- und Empfangselektronik COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Umformerschaltung US (bzw. deren vorbezeichnete Sende- und Empfangselektronik COM) so ausgebildet sein, daß sie über eine, ggf. auch als 4-20 mA-Stromschleife konfigurierte Zweileiter-Verbindung 2L mit dem externer elektronischen Datenverarbeitungssystem elektrisch verbindbar ist und darüber sowohl die für den Betrieb des Coriolis-Massendurchfluß-Meßgeräts erforderliche elektrische Leistung von der vorbezeichneten Auswerte- und Versorgungseinheit des Datenverarbeitungssystems beziehen als auch Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Umformerschaltung US auch so ausgebildet sein, daß sie nominell mit einer maximalen Leistung von 1 W oder weniger betrieben werden kann und/oder eigensicher ist. Die Umformerschaltung US des erfindungsgemäßen Coriolis-Massendurchfluß-Meßgeräts kann zudem beispielsweise auch modular aufgebaut sein, derart, daß diverse Elektronik-Komponenten der Umformerschaltung US, wie etwa eine Antriebselektronik Exc zum Ansteuern des Meßaufnehmers, eine Meß- und Steuerelektronik DSV zum Verarbeiten von vom Meßaufnehmer bereitgestellten Meßsignalen und zum Ermitteln von Meßwerten anhand von Meßsignalen des Meßaufnehmers, eine interne Energieversorgungsschaltung VS zum Bereitstellen einer oder mehrerer interner Betriebsspannungen und/oder die vorbezeichnete, der Kommunikation mit einem übergeordneten Meßdatenverarbeitungssystem bzw. einem externen Feldbus dienliche Sende- und Empfangselektronik COM, jeweils auf einer eigenen Leiterplatte angeordnet und/oder jeweils mittels eines eigenen Mikroprozessores gebildet sind. Zum Visualisieren von Meßgerät intern erzeugten Meßwerten und/oder Meßgerät intern generierten Statusmeldungen, wie etwa eine Fehlermeldung oder einen Alarm, vor Ort kann das Coriolis-Massendurchfluß-Meßgerät desweiteren ein, zumindest zeitweise auch mit der Umformerschaltung US, beispielsweise nämlich deren vorbezeichneten Meß- und Steuerelektronik DSV, kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Desweiteren kann die Umformerschaltung US - wie auch aus einer Zusammenschau der der Fig. 1 und 2 ohne weiteres ersichtlich - ferner beispielsweise in einem entsprechenden, insb. schlag- und/oder auch explosionsfest und/oder hermetisch dicht ausgebildeten, eigenen Elektronik-Gehäuse 200 untergebracht sein.

Bei dem Meßaufnehmer MW handelt es sich um einen Meßaufnehmer vom Vibrationstyp, nämlich einen Meßaufnehmer mit wenigstens einem Vibrationselement 10, mit einer Erregeranordnung 41 und mit einer Sensoranordnung 51, 52, wobei sowohl die Erregeranordnung 41 als auch die Sensoranordnung mit der Umformerschaltung US elektrisch gekoppelt sind und wobei das wenigstens eine Vibrationselement 10 eingerichtet ist, von strömendem Meßstoff kontaktiert, beispielsweise nämlich von Meßstoff durchströmt und/oder umströmt, zu werden und währenddessen vibrieren gelassen zu werden, beispielsweise nämlich mit wenigstens einer dem Vibrationselement bzw. dem damit gebildeten Meßaufnehmer innewohnenden Resonanzfrequenz. Die Erregeranordnung 41 des Meßaufnehmers MW wiederum ist dafür eingerichtet, dorthin eingespeiste elektrische Leistung in erzwungene mechanische Schwingungen des wenigstens einen Vibrationselements 10 bewirkende mechanische Leistung zu wandeln. Bei dem Meßaufnehmer kann es sich dementsprechend beispielsweise auch um einen konventionellen - beispielsweise nämlich auch aus den eingangs erwähnten EP-A 816 807, US-A 2002/0033043, US-A 2006/0096390, US-A 2007/0062309, US-A 2007/0119264, US-A 2008/0011101, US-A 2008/0047362, US-A 2008/0190195, US-A 2008/0250871, US-A 2010/0005887, US-A 2010/0011882, US-A 2010/0257943, US-A 2011/0161017, US-A 2011/0178738, US-A 2011/0219872, US-A 2011/0265580, US-A 2011/0271756, US-A 2012/0123705, US-A 2013/0042700, US-A 2016/0313162, US-A 2017/0261474, US-A 44 91 009, US-A 47 56 198, US-A 47 77 833, US-A 48 01 897, US-A 48 76 898, US-A 49 96 871, US-A 50 09 109, US-A 52 87 754, US-A 52 91 792, US-A 53 49 872, US-A 57 05 754, US-A 57 96 010, US-A 57 96 011, US-A 58 04 742, US-A 58 31 178, US-A 59 45 609, US-A 59 65 824, US-A 60 06 609, US-A 60 92 429, US-B 62 23 605, US-B 63 11 136, US-B 64 77 901, US-B 65 05 518, US-B 65 13 393, US-B 66 51 513, US-B 66 66 098, US-B 67 11 958, US-B 68 40 109, US-B 69 20 798, US-B 70 17 424, US-B 70 40 181, US-B 70 77 014, US-B 72 00 503, US-B 72 16 549, US-B 72 96 484, US-B 73 25 462, US-B 73 60 451, US-B 77 92 646, US-B 79 54 388, US-B 83 33 120, US-B 86 95 436, WO-A 00/19175, WO-A 00/34748, WO-A 01/02816, WO-A 01/71291, WO-A 02/060805, WO-A 2005/093381, WO-A 2007/043996, WO-A 2008/013545, WO-A 2008/059262, WO-A 2010/099276, WO-A 2013/092104, WO-A 2014/151829, WO-A 2016/058745, WO-A 2017/069749, WO-A 2017/123214, WO-A 2017/143579, WO-A 85/05677, WO-A 88/02853, WO-A 89/00679, WO-A 94/21999, WO-A 95/03528, WO-A 95/16897, WO-A 95/29385, WO-A 98/02725, WO-A 99/40 394 oder PCT/EP2017/067826 bekannten - Meßaufnehmer vom Vibrationstyp handeln. Das Vibrationselement 10 kann - wie bei Meßaufnehmern der in Rede stehenden Art bzw. damit gebildeten Coriolis-Massendurchfluß-Meßgeräten üblich - beispielsweise mittels eines oder mehreren, insb. zumindest abschnittsweise geraden und/oder zumindest abschnittsweise kreisbogenförmigen, Rohren mit einem von einer, insb. metallischen, Rohrwand und einem davon umhüllten Lumen gebildet sein, wobei das Rohr bzw. jedes der Rohre zudem jeweils dafür eingerichtet ist, den zumindest zeitweise strömenden fluiden Meßstoff zu führen (bzw. von nämlichem Meßstoff durchströmt zu werden) und währenddessen entsprechend vibrieren gelassen zu werden. Das Vibrationselement kann beispielsweise aber auch mittels eines oder mehreren innerhalb eines Lumens eines vom Meßstoff durchströmten Rohrs des Meßaufnehmers plazierten Verdrängerelementen gebildet sein, wobei das Verdrängerelement bzw. jedes der Verdrängerelemente jeweils dafür eingerichtet ist, von Meßstoff umströmt und währenddessen entsprechend vibrieren gelassen zu werden. Das wenigstens eine Vibrationselement 10 kann ferner - wie auch in Fig. 2 angedeutet bzw. aus einer Zusammenschau der Fig. 1 und 2 ohne weiteres ersichtlich - zusammen mit der Erregeranordnung 41 und der Sensoranordnung sowie ggf. weiteren Komponenten des Meßaufnehmers innerhalb eines Aufnehmer-Gehäuses 100 untergebracht sein. Zudem kann beispielsweise das vorbezeichnete Elektronik-Gehäuse 200 - wie auch in Fig. 1 bzw. 2 dargestellt - unter Bildung eines Coriolis-Massendurchfluß-Meßgeräts in Kompaktbauweise an nämliches Aufnehmer-Gehäuse 100 montiert sein.

Nach einer weiteren Ausgestaltung der Erfindung ist die Erregeranordnung, wie bei Meßaufnehmern vom Vibrationstyp durchaus üblich, mittels wenigstens eines elektro-mechanischen - beispielsweise nämliche einem elektrodynamischen, elektromagnetischen oder piezoelektrischen - Schwingungserregers 41 gebildet, der - wie auch in Fig. 2 angedeutet - beispielsweise so positioniert sein kann, daß eine damit generierte Kraft in Richtung einer durch einen Massenschwerpunkt des wenigstens einen Vibrationselements verlaufenden gedachten Kraftwirkungslinie auf das Vibrationselement wirkt, und/oder der - wie auch in Fig. 2 dargestellt - beispielsweise auch der einzige Schwingungen des Vibrationselements 10 bewirkende Schwingungserreger der Erregeranordnung bzw. des damit gebildeten Meßaufnehmers sein kann.

Die Umformerschaltung US des erfindungsgemäßen Coriolis-Massendurchfluß-Meßgeräts ist zudem u.a. dafür vorgesehen und entsprechend eingerichtet, ein - beispielsweise bipolares und/oder zumindest zeitweise periodisches, ggf. auch harmonisches - elektrisches Treibersignal e1 zu generieren und damit elektrische Leistung in die Erregeranordnung des Meßaufnehmers MW einzuspeisen, derart, daß das wenigstens eine Vibrationselement 10 zumindest anteilig Nutzschwingungen, nämlich erzwungene mechanische Schwingungen mit wenigstens einer Nutzfrequenz $f_N$ ausführt, die geeignet sind, im strömendem Meßstoff vom Massenstrom abhängige, gleichwohl auf das Vibrationselement 10 zurückwirkende Corioliskräfte zu erzeugen, derart, daß den vorbezeichneten Nutzschwingungen Coriolisschwingungen, nämlich durch die Corioliskräfte zusätzlich erzwungene, vom Massenstrom m des Meßstoffs abhängige mechanische Schwingungen mit der Nutzfrequenz $f_N$ überlagert sind. Bei der Nutzfrequenz $f_N$ handelt es sich um eine durch das elektrische Treibersignal e1 vorgegebene, beispielsweise der vorbezeichneten Resonanzfrequenz $f_R$ des Meßaufnehmers entsprechenden, Schwingungsfrequenz der erzwungenen mechanischen Schwingungen des Vibrationselements ($f_N = f_R$). Das Treibersignal e1 kann dementsprechend beispielsweise ein die vorbezeichnete, die Nutzfrequenz $f_N$ bestimmende Signalkomponente $e1_N$ bildendes harmonisches elektrisches Signal oder beispielsweise auch ein sich aus mehreren (spektrale) Signalkomponenten zusammensetzendes, gleichwohl eine die Nutzfrequenz $f_N$ bestimmende spektrale Nutzkomponente $e1_N$ enthaltendes, mehrfrequentes elektrisches Signal sein. Bei den mittels Erregeranordnung 41 und daran angeschlossener Umformerschaltung US angeregten Nutzschwingungen kann es ferner, wie bei Coriolis-Massendurchfluß-Meßgeräten durchaus üblich, beispielsweise um Biegeschwingungen des wenigstens einen Vibrationselements 10 um ein zugehörige Ruhelage handeln, wobei als Nutzfrequenz $f_N$ beispielsweise eine auch von der Dichte und/oder der Viskosität des im Meßaufnehmer geführten bzw. dessen Vibrationselement 10 kontaktierenden Meßstoffs abhängige momentane Resonanzfrequenz eines lediglich einen einzigen Schwingungsbauch aufweisenden Biegeschwingungsgrundmodes des wenigstens einen Vibrationselements 10 und/oder eine niedrigste momentane Resonanzfrequenz des wenigstens einen Vibrationselements 10 ausgewählt, nämlich mittels des Treibersignals e1 eingestellt sein kann. Zum Erzeugen des Treibersignals e1 bzw. zum Einstellen der Nutzfrequenz $f_N$ kann die Umformerschaltung US, wie bei Coriolis-Massendurchfluß-Meßgeräten durchaus üblich, beispielsweise eine entsprechende, insb. mittels einer oder mehreren dem Ermitteln und Einstellen der Nutzfrequenz $f_N$ dienlichen Phasenregelschleifen (PLL - phase locked loop) gebildete, Antriebselektronik Exc aufweisen. Nach einer weiteren Ausgestaltung der Erfindung weist die Antriebselektronik Exc einen digitalen Frequenzausgang auf. Zudem ist die Antriebselektronik Exc ferner auch dafür eingerichtet, an nämlichem Frequenzausgang eine Frequenzfolge, nämlich eine Folge von die für das Treibersignal e1 eingestellte Signalfrequenz, beispielsweise nämlich die momentan eingestellte Nutzfrequenz (bzw. die Signalfrequenz von dessen Signalkomponente eN1), quantifizierenden digitalen Frequenzwerten auszugeben.

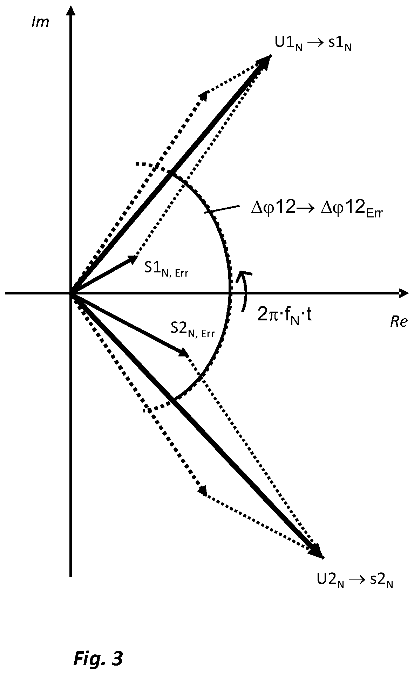

Die Sensoranordnung des Meßaufnehmers wiederum ist dafür eingerichtet, mechanische Schwingungen des wenigstens einen Vibrationselements 10, nicht zuletzt auch erzwungene mechanische Schwingungen des wenigstens einen Vibrationselements 10, zu erfassen und jeweils zumindest anteilig Schwingungsbewegungen des wenigstens einen Vibrationselements 10 repräsentierende Schwingungsmeßsignale (s1, s2) bereitzustellen. Zum Erfassen mechanischer Schwingungen des wenigstens einen Vibrationselements weist die Sensoranordnung des erfindungsgemäßen Coriolis-Massendurchfluß-Meßgeräts einen, beispielsweise mittels einer ersten Tauchspule gebildeten, elektrodynamischen ersten Schwingungssensor 51 und wenigstens einen, beispielsweise mittels einer zweiten Tauchspule gebildeten und/oder zum ersten Schwingungssensor 51 baugleichen, elektrodynamischen zweiten Schwingungssensor 52 auf. Im besonderen ist der Schwingungssensor 51 dafür eingerichtet, Schwingungsbewegungen des wenigstens einen Vibrationselements 10 an einem ersten Meßpunkt in ein elektrisches erstes Schwingungsmeßsignal s1 der Sensoranordnung zu wandeln, derart, daß - wie auch in Fig. 3 angedeutet - nämliches Schwingungsmeßsignal s1 wenigstens eine (von der Zeit t abhängige) erste Nutzkomponente $s1_N$, nämlich eine Wechselspannungskomponente mit einer der Nutzfrequenz $f_N$ entsprechenden Frequenz aufweist, und ist der Schwingungssensor 52 dafür eingerichtet, Schwingungsbewegungen des wenigstens einen Vibrationselements an einem vom ersten Meßpunkt entfernten zweiten Meßpunkt in ein elektrisches zweites Schwingungsmeßsignal s2 der Sensoranordnung zu wandeln, derart, daß - wie auch in Fig. 3 angedeutet - nämliches Schwingungsmeßsignal s2 wenigstens eine (von der Zeit t abhängige) zweite Nutzkomponente $s2_N$, nämlich eine Wechselspannungskomponente mit einer der Nutzfrequenz $f_N$ entsprechenden Frequenz aufweist. Indem es sich bei jedem der beiden Schwingungssensoren 51, 52 jeweils um einen elektrodynamischen Schwingungssensor handelt, weisen dementsprechend die Nutzkomponente $s1_N$ eine von der Nutzfrequenz $f_N$ sowie von einem ersten magnetischen Fluß $\Phi1$, nämlich einem magnetischen Fluß durch den Schwingungssensor 51 abhängige Amplitude $U1_N$ (bzw. abhhängigen Spannungspegel) und die Nutzkomponente $s2_N$ eine von der Nutzfrequenz $f_N$ sowie von einem zweiten magnetischen Fluß $\Phi2$, nämlich einem magnetischen Fluß durch den Schwingungssensor 52 abhängige Amplitude $U2_N$ (bzw. abhängigen Spannungspegel) auf. Jeder der beiden Schwingungssensoren kann, wie bei Meßaufnehmern der in Rede stehenden Art durchaus üblich, beispielsweise jeweils mittels einer Tauchspule gebildet sein.

Dementsprechend ist nach einer weiteren Ausgestaltung der Erfindung vorgesehen, daß der erste Schwingungssensor einen, beispielsweise nämlich unter Bildung des ersten Meßpunkts mechanisch mit dem wenigstens einen Vibrationselement verbundenen, ersten Permanentmagneten sowie eine, beispielsweise mechanisch mit dem wenigstens einen Vibrationselement und/oder mit dem vorbezeichneten Aufnehmer-Gehäuse verbundene, erste Luftspule aufweist und daß der zweite Schwingungssensor einen, beispielsweise nämlich unter Bildung des zweiten Meßpunkts mechanisch mit dem wenigstens einen Vibrationselement verbundenen, zweiten Permanentmagneten sowie eine, beispielsweise mechanisch mit dem wenigstens einen Vibrationselement und/oder mit dem vorbezeichneten Aufnehmer-Gehäuse verbundene, zweite Luftspule aufweist. Der erste Permanentmagnet bildet einen den magnetischer Fluß $\Phi1$ führenden ersten Luftspalt innerhalb dem die erste Luftspule zumindest teilweise positioniert ist und der zweite Permanentmagnet bildet einen den magnetischer Fluß $\Phi2$ führenden zweiten Luftspalt innerhalb dem die zweite Luftspule zumindest teilweise positioniert ist. Ferner sind der erste Permanentmagnet und die erste Luftspule eingerichtet, durch Schwingungsbewegungen des wenigstens einen Vibrationselements relativ zueinander bewegt zu werden und eine als Schwingungsmeßsignal s1 dienliche erste Induktionsspannung ($u_{i1}$) zu generieren, und sind der zweite Permanentmagnet und die zweite Luftspule eingerichtet, durch Schwingungsbewegungen des wenigstens einen Vibrationselements relativ zueinander bewegt zu werden und eine als Schwingungsmeßsignal s2 dienliche zweite Induktionsspannung ($u_{12}$) zu generieren, wobei die vorbezeichneten ersten und zweiten Induktionsspannungen entsprechend dem Induktionsgesetzt (für Bewegungsinduktion):

$$u_{i1} = \frac{d\Psi1}{dt} \sim \Psi1 \cdot 2\pi \cdot f_N \cdot \cos(2\pi \cdot f_N \cdot t) \sim N1 \cdot \Phi1 \cdot 2\pi \cdot f_N \cdot \cos(2\pi \cdot f_N \cdot t) \rightarrow s1 \ \ \text{bzw.}$$

$$u_{i2} = \frac{d\Psi2}{dt} \sim \Psi2 \cdot 2\pi \cdot f_N \cdot \cos(2\pi \cdot f_N \cdot t) \sim N2 \cdot \Phi2 \cdot 2\pi \cdot f_N \cdot \cos(2\pi \cdot f_N \cdot t) \rightarrow s2$$

jeweils von einem jeweiligen Verkettungs- bzw. Induktionsfluß ($\Psi1 = N1 \cdot \Phi1$ bzw. $\Psi2 = N2 \cdot \Phi2$), nämlich einem gesamtem magnetischen Fluß innerhalb der jeweiligen ersten bzw. zweiten Luftspule, mithin vom jeweiligen magnetischen Fluß und eines jeweils zugehörigen Windungszahl (N1 bzw. N2) abhängig sind.

Die vom Meßaufnehmer MW generierten Schwingungssmeßsignale s1, s2 sind im weiteren Verlauf der Umformerschaltung US, beispielsweise via elektrischer Verbindungsleitungen, zugeführt um dort, beispielsweise mittels digitaler Signalverarbeitung (DSV), entsprechend verarbeitet, beispielsweise nämlich vorverstärkt, gefiltert und digitalisiert und hernach entsprechend ausgewertet zu werden.

Die Schwingungssensoren 51, 52 sind nach einer weiteren Ausgestaltung der Erfindung zudem so angeordnet, daß im Falle einer Anregung der vorbezeichneten Coriolisschwingungen des wenigstens einen Vibrationselements 10 jede der Nutzkomponenten $s1_N$, $s2_N$ der Schwingungsmeßsignale s1 bzw. s2 zudem jeweils auch einen vom Massenstrom m des durch den Meßaufnehmer MW strömenden Meßstoff abhängigen, beispielsweise relativ zum Treibersignal e1 bzw. dessen Nutzkomponente $e1_N$ meßbaren, Phasenwinkel aufweist; dies im besonderen in der Weise, daß, wie auch in Fig. 3 angedeutet, zwischen der Nutzkomponente $s1_N$ des Schwingungssignals s1 und der Nutzkomponente $s2_N$ des Schwingungssignals s2 eine von nämlicher Massenstrom m abhängige Phasendifferenz $\Delta\varphi12$ ($\Delta\varphi12 = f(m)$), nämlich eine Differenz zwischen dem Phasenwinkel der ersten Nutzkomponente $s1_N$ und dem Phasenwinkel der zweiten Nutzkomponent $s2_N$ existiert bzw. daß die Schwingungsmeßsignale s1, s2 einer Änderung des Massenstroms des im Meßwandler geführten Meßstoffs mit einer Änderung nämlicher Phasendifferenz $\Delta\varphi12$ ($\Delta\varphi12*$) folgen. Die Schwingungssensoren 51, 52 können, wie derartigen Meßaufnehmern durchaus üblich bzw. auch in Fig. 2 angedeutet, dementsprechend beispielsweise jeweils im gleichen Abstand zu einem Massenschwerpunkt des wenigstens einen Vibrationselements 10, beispielsweise also zum Massenschwerpunkt des wenigstens einen Rohrs bzw. zum Massenschwerpunkt des wenigstens einen Verdrängerelements, positioniert sein, derart, daß in Strömungsrichtung gesehen der Schwingungssensors 51 einlaßseitig am wenigstens einen Vibrationselement 10 bzw. in dessen Nähe und der Schwingungssensor 52 auslaßseitig am wenigstens einen Vibrationselement 10 bzw. in dessen Nähe angeordnet sind. Zudem können die beiden Schwingungssensoren 51, 52 auch die einzigen dem Erfassen von Schwingungen des wenigstens einen Vibrationselement 10 dienlichen Schwingungssensoren sein, derart, daß die Sensoranordnung außer nämlichen Schwingungssensoren 51, 52 keinen weiteren Schwingungssensor aufweist. Nach einer weiteren Ausgestaltung der Erfindung ist ferner vorgesehen, daß die Sensoranordnung zum Erfassen einer Temperatur des Meßaufnehmers an einem Temperatur-Meßpunkt wenigstens einen Temperatursensor 61 aufweist, der eingerichtet ist, ein Temperaturmeßsignal, nämlich ein die Temperatur am Temperatur-Meßpunkt repräsentierendes Meßsignal, insb. mit einer von der Temperatur abhängigen elektrischen Spannung und/oder einem von der Temperatur abhängigen elektrischen Strom, bereitzustellen. Alternativ oder in Ergänzung kann die Sensoranordnung beispielsweise auch wenigstens einen dem Erfassen von mechanischen Spannungen innerhalb des Meßaufnehmers dienlichen Dehnungssensor aufweisen.

Die Umformerschaltung US ist, wie bereits erwähnt, außer für die Erzeugung des Treibersignals e1 ferner auch dafür vorgesehen bzw. eingerichtet, die Schwingungsmeßsignale s1, s2 zu empfangen und auszuwerten, nämlich anhand der Schwingungsmeßsignale s1, s2, beispielsweise nämlich anhand der vorbezeichneten Phasendifferenz $\Delta\varphi 12$ zwischen den ersten und zweiten Nutzkomponenten, den Massenstrom repräsentierende Massenstrom-Meßwerte zu ermitteln, beispielsweise nämlich auch in Form von Analogwerten und/oder in Form von Digitalwerten auszugeben. Nach einer weiteren Ausgestaltung der Erfindung ist die Umformerschaltung US dementsprechend ferner dafür eingerichtet, anhand der Schwingungsmeßsignale s1, s2 zunächst die Phasendifferenz $\Delta\varphi 12$ zu ermitteln. Zudem kann die Umformerschaltung US auch eingerichtet sein, von wenigstens einem der anliegenden Schwingungsmeßsignale s1, s2 den jeweiligen vorbezeichnete Phasenwinkel von dessen jeweiliger Nutzkomponente $s1_N$, $s2_N$, beispielsweise relativ zum Treibersignal e1 bzw. dessen vorbezeichneter Nutzkomponente $e1_N$, zu ermitteln und/oder anhand wenigstens eines der Schwingungsmeßsignale s1, s2 die Nutzfrequenz $f_N$ zu ermitteln, beispielsweise auch im Betrieb zumindest eine Phasenfolge, nämlich eine Sequenz von den Phasenwinkel einer der ersten und zweiten Nutzkomponenten entsprechend quantifizierenden digitalen Phasenwerten und/oder eine Frequenzfolge, nämlich eine Sequenz von die Nutzfrequenz $f_N$ quantifizierenden digitalen Frequenzwerten zu generieren, derart, daß die Phasenfolge einem zeitlichen Verlauf des Phasenwinkel der entsprechenden Nutzkomponente bzw. die Frequenzfolge einem zeitlichen Verlauf der Nutzfrequenz entspricht. Die Ermittlung der Phasenwinkel bzw. die Generierung der vorbezeichneten Phasenfolge kann beispielsweise, wie bei Coriolis-Massendurchfluß-Meßgeräten durchaus üblich, mittels einer in der Umformerschaltung US durchgeführten Quadraturdemodulation (Q/I-Demodulation) des jeweiligen Schwingungsmeßsignals mit einem die Nutzfrequenz aufweisenden ersten harmonischen Referenzsignal (Q) und einem dazu um 90° phasenverschobenen zweiten harmonischen Referenzsignal (I) realisiert sein. Nicht zuletzt für den erwähnten Fall, daß die mittels Treibersignals e1 bewirkten Nutzschwingungen Resonanzschwingungen des wenigstens einen Vibrationselements 10 sind, kann die Nutzfrequenz $f_N$ der Schwingungsmeßsignale s1, s2 als Maß für die Dichte und/oder die Viskosität des Meßstoffs dienen und kann dementsprechend mittels der Umformerschaltung US die Dichte und/oder die Viskosität basierend auf der vorbezeichneten Frequenzfolge ermittelt werden. Nicht zuletzt für den vorbezeichneten Fall, daß die Sensoranordnung einen Temperatursensor 61 und/oder einen Dehnungssensor aufweist, ist die Umformerschaltung US nach einer weiteren Ausgestaltung der Erfindung ferner auch dafür eingerichtet, das vom Temperatursensor generierte Temperaturmeßsignal bzw. das vom Dehnungssensor generierte Dehnungsmeßsignal zu empfangen und zu verarbeiten, insb. nämlich zu digitalisieren und auszuwerten; dies beispielsweise derart, daß die Umformerschaltung US anhand des wenigstens einen Temperaturmeßsignals eine Temperatur des Verdrängerelments und/oder ein Temperatur des Meßstoffs ermittelt. Nach einer weiteren Ausgestaltung der Erfindung ist die Umformerschaltung US ferner eingerichtet, anhand des Schwingungsmeßsignals s1 eine erste Nutzkomponentenfolge, nämlich eine Sequenz von die Amplitude $U1_N$ der ersten Nutzkomponente $s1_N$ quantifizierenden digitalen Amplitudenwerten $U1_N[m]$ ($m \in \boldsymbol{N}$ - natürliche Zahlen) zu generieren und ist die Umformerschaltung zudem eingerichtet, anhand des Schwingungsmeßsignals s2 eine zweite Nutzkomponentenfolge, nämlich eine Sequenz von die Amplitude $U2_N$ der zweiten Nutzkomponente $s2_N$ quantifizierenden digitalen Amplitudenwerten $U2_N[n]$ ($n \in \boldsymbol{N}$) zu generieren, beispielsweise nämliche derart, daß die Amplitudenwerten $U1_N[m]$ zu äquidistant aufeinanderfolgenden Zeitpunkten $t_m = m \cdot T_{s1}$, mithin mit einer Aktualisierungsrate $f_{s1} = 1 / (t_{m+1} - t_m) = 1 / T_{s1}$ bzw. die die Amplitudenwerten $U2_N[m]$ zu äquidistanten aufeinanderfolgenden Zeitpunkten $t_n = n \cdot T_{s2}$, mithin mit einer Aktualisierungsrate $f_{s2} = 1 / (t_{n+1} - t_n) = 1 / T_{s2}$ ermitteltet, derart daß die erste Nutzkomponentenfolge einem zeitlichen Verlauf der Amplitude $U1_N$ der ersten Nutzkomponente $s1_N$ bzw. die zweite Nutzkomponentenfolge einem zeitlichen Verlauf der Amplitude $U2_N$ der zweiten Nutzkomponente $s2_N$ zumindest näherungsweise entsprechen. Die vorbezeichneten Aktualisierungsraten $f_{s1}$, $f_{s2}$ können beispielsweise so gewählt sein, daß sie gleich groß sind ($f_{s1} = f_{s2}$) und/oder daß ein Amplitudenwert $U1_N[m]$ jeweils im wesentlichen zeitlich zu einem korrespondierenden Amplitudenwert $U2_N[n]$ ermittelt werden ($t_m = t_n$). Die Ermittlung der Nutzkomponenten $s1_N$, $s2_N$ bzw. die Generierung der vorbezeichneten ersten und zweiten Nutzkomponentenfolge kann beispielsweise wiederum mittels der vorbezeichneten Quadraturdemodulation (Q/I-Demodulation) des jeweiligen Schwingungsmeßsignals s1 bzw. s2 realisiert sein.

Zum Verarbeiten der vom Meßaufnehmer gelieferten Schwingungsmeßsignale s1, s2, ggf. auch des vorbezeichneten Temperatur- und/oder Dehnungsmeßsignals, beispielsweise nämlich auch zum Ermitteln der Massenstrom-Meßwerte und ggf. auch zum Ermitteln der Dichte-Meßwerte und/oder der Viskositäts-Meßwerte, kann die Umformerschaltung US, wie bereits angedeutet, ferner eine entsprechende Meß- und Steuerelektronik DSV aufweisen, die, wie in Fig. 2 schematisch dargestellt, mit dem Meßaufnehmer MW bzw. dessen Sensoranordnung 51, 52 elektrisch verbunden ist, beispielsweise derart, daß von der Meß- und Steuerelektronik DSV ein erster Meßsignaleingang der Umformerschaltung US für das Schwingungsmeßsignal s1 sowie wenigstens ein zweiter Meßsignaleingang der Umformerschaltung US für das Schwingungsmeßsignal s2 gebildet sind. Die Meß- und Steuerelektronik DSV kann vorteilhaft dafür eingerichtet sein, die zugeführten Schwingungsmeßsignale s1, s2, und ggf. auch die Temperatur- und/oder Dehnungsmeßsignale digital zu verarbeiten, beispielsweise nämlich mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Die im Betrieb des Coriolis-Massendurchfluß-Meßgeräts in einem oder mehreren der vorbezeichneten Mikroprozessoren bzw. digitalen Signalprozessoren der Umformerschaltung US ausgeführten Programm-Codes können jeweils z.B. in einem oder mehreren nicht flüchtigen Datenspeichern (EEPROM) der Umformerschaltung US persistent gespeichert sein und beim Starten derselben in einen in der Umformerschaltung US bzw. der Meß- und Steuerelektronik DSV vorgesehenen, z.B. im Mikroprozessor integrierten, flüchtigen Datenspeicher (RAM) geladen werden. Die Schwingungsmeßsignale s1, s2 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung der Schwingungsmeßsignale s1, s2 digitalisiert wird, vgl. hierzu beispielsweise die eingangs erwähnten US-B 63 11 136 oder US-A 2011/0271756. Dementsprechend ist nach einer weiteren Ausgestaltung der Erfindung in der Umformerschaltung US, beispielsweise nämlich in der vorbezeichneten Meß- und Steuerelektronik DSV, ein erster Analog-zu-Digital-Wandler für das Schwingungsmeßsignal s1 sowie ein zweiter Analog-zu-Digital-Wandler für das Schwingungsmeßsignal s2 und/oder ist in der in der Umformerschaltung US wenigstens ein nicht flüchtiger elektronischer Datenspeicher EEPROM vorgesehen, der dafür eingerichtet ist, digitale Daten, beispielsweise nämlich auch ohne eine angelegte Betriebsspannung, vorzuhalten. Mittels der Meß- und Steuerelektronik DSV kann zudem auch die vorbezeichnete Phasenfolge und/oder die vorbezeichnete Frequenzfolge generiert werden, beispielsweise nämlich auch an einem entsprechenden digitalen Phasenausgang bzw. an einem entsprechenden digitalen Frequenzausgang ausgeben und so für eine weitere Verarbeitung in der Umformerschaltung US bereitgestellt werden. Für den Fall, daß die Umformerschaltung US mittels der vorbezeichnete Antriebselektronik Exc sowie mittels der vorbezeichneten Meß- und Steuerelektronik DSV gebildet ist, kann deren Phasenausgang mit einem Phaseneingang eines in der Antriebselektronik Exc vorgesehenen, beispielsweise auch einen Bestandteil der vorbezeichneten Phasenregelschleife (PLL) bildenden, Phasenkomparators elektrisch verbunden sein und kann zudem nämlicher Phasenkomparator eingerichtet sein, eine anhand der Phasenfolge eine Phasendifferenz zwischen der vorbezeichneter Signalkomponente $e1_N$ des Treibersignals e1 und wenigstens einer der Nutzkomponenten $s1_N$, $s2_N$ festzustellen und/oder ein Ausmaß nämlicher Phasendifferenz zu ermitteln. Nach einer weiteren Ausgestaltung der Erfindung ist die Meß- und Steuerelektronik DSV ferner auch dafür eingerichtet, die vorbezeichneten ersten und zweiten Nutzkomponentenfolgen zu erzeugen und zumindest eine der Nutzkomponentenfolgen an einem digitalen Amplitudenausgang auszugeben. Der vorbezeichnete Amplitudenausgang der Meß- und Steuerelektronik DSV kann ferner beispielswiese auch mit einem eine Amplitude der Schwingungen des wenigstens einen Vibrationselements 10 erfassenden Amplitudeneingang der Antriebselektronik Exc elektrisch verbunden sein und die Antriebselektronik Exc kann zudem dafür eingerichtet sein, basierend auf der Amplitudenfolge das Treibersignal e1 so zu generieren, daß die Schwingungen des wenigstens einen Vibrationselements bzw. dessen Nutzschwingungen eine dafür vorgegeben Schwingungsamplitude erreichen bzw. nicht dauerhaft über- oder unterschreiten.

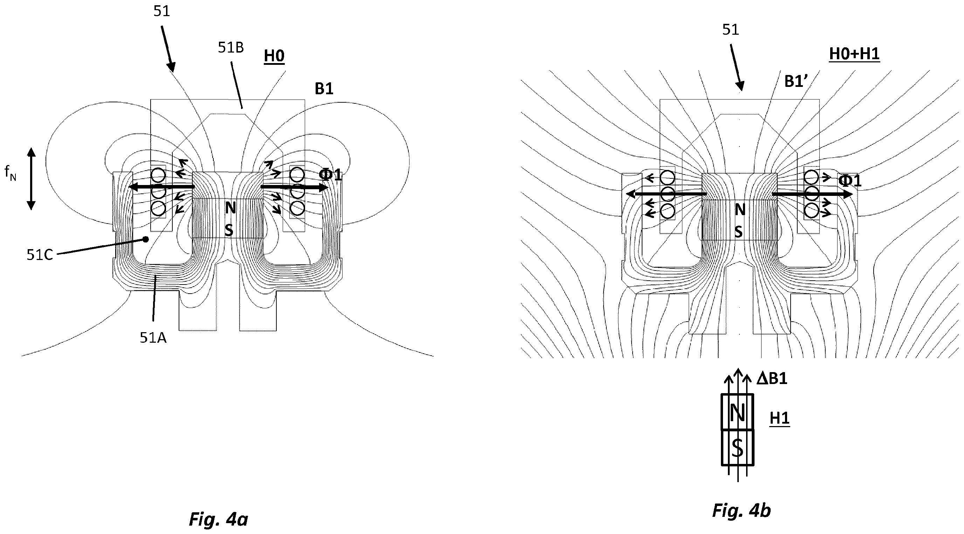

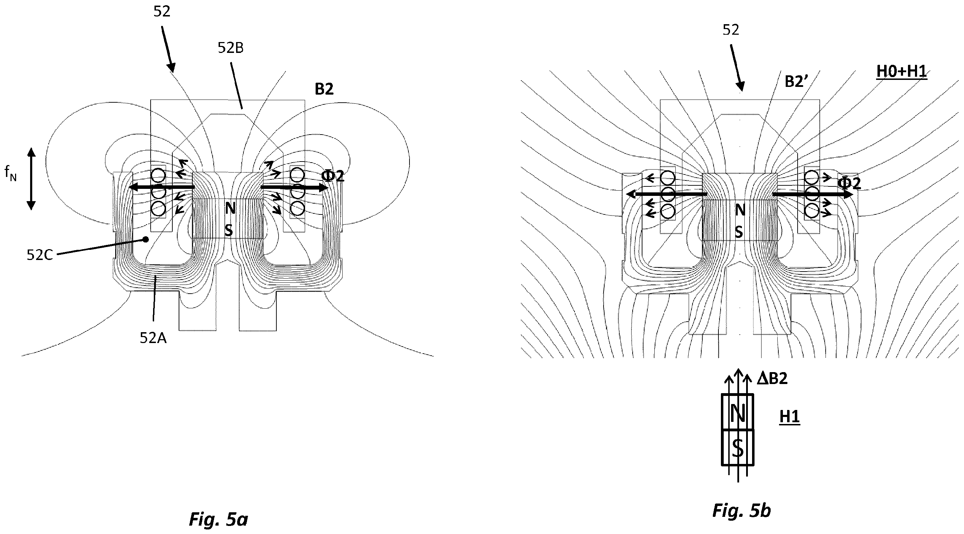

Wie bereits erwähnt, sind die Nutzkomponenten der beiden Schwingungsmeßsignale s1, s2 bzw. deren Amplituden, bedingt durch das Wirkprinzip der beiden elektrodynamischen Schwingungssensoren, von der zeitlichen Änderung des magnetischen Flusses innerhalb des Schwingungssensors, im Falle einer Tauchspule als Schwingungssensor nämlich des Verkettungs- bzw. Induktionsflusses innerhalb der jeweiligen Luftspule, abhängig; dies im besonderen auch in der Weise, daß eine von außerhalb des Coriolis-Massendurchfluß-Meßgeräts während dessen Meßbetriebs bewirkte zusätzliche Beeinflussung eines bekannten inneren, nämlich innerhalb des jeweiligen Schwingungssensors bei der Kalibrierung des Meßaufnehmers bzw. des damit gebildeten Coriolis-Massendurchfluß-Meßgeräts etablierten Magnetfeldes H0 bzw. eine damit einhergehende Beeinflussung eines bekannten, nämlich durch die vorbezeichnete Kalibrierung ermittelten Änderungsverhaltens des magnetischen Flusses innerhalb des ersten und/oder zweiten Schwingungssensors, nicht zuletzt auch ein Änderungsverhalten ($\Delta\Phi1$, $\Delta\Phi2$) des magnetischen Flusses $\Phi1$ bzw. $\Phi2$ pro Schwingungsperiode der Nutzschwingungen, durch ein externes, nämlich von außerhalb des Coriolis-Massendurchfluß-Meßgeräts verursachtes, gleichwohl sich auch innerhalb des Coriolis-Massendurchfluß-Meßgeräts ausbreitendes Magnetfeld H1 eine unerwünschte, beispielsweise nämlich zu erhöhten Fehlern bei der Messung des Massenstroms führenden, Beeinflussung der ersten und/oder zweiten Nutzkomponente, mithin eine Beeinträchtigung der Funktionstüchtigkeit der Sensoranordnung bewirken kann. Ursachen für ein solches externes Magnetfeld H1 kann beispielsweise ein in der Nähe des jeweiligen Coriolis-Massendurchfluß-Meßgeräts erzeugtes elektrisches Feld sein, etwa auf Grund von in der Nähe des Coriolis-Massendurchfluß-Meßgeräts betriebene Elektromotoren, Transformatoren, Wechselrichter oder hohe elektrische (Gleich-)Ströme führende Anlagenteilen, wie z.B. Stromschienen, und/oder kann - wie auch in Fig. 4b oder 5b jeweils angedeutet - ein in der Nähe des jeweiligen Coriolis-Massendurchfluß-Meßgeräts positionierter Magnet, beispielsweise ein Elektromagnet oder ein Permanentmagnet, sein. Im Falle von Tauchspulen als Schwingungssensoren ist das vorbezeichnete innere Magnetfeld H0 jeweils im wesentlichen durch deren jeweilige Permanentmagneten bzw. das vorbezeichnete Änderungsverhalten des magnetischen Flusses im wesentlichen durch die den Schwingungsbewegungen des wenigstens einen Vibrationselements entsprechenden Bewegungen des jeweiligen Permanentmagneten im zugehörigen Luftspalt bestimmt und kann das externe Magentfeld H1 dazu führen, daß eine dem inneren Magnetfeld entsprechende Flußdichte (B1 bzw. B2) des jeweiligen magnetischen Flusses $\Phi$1 bzw. $\Phi$2 verändert wird (B1 -> B1' = B1 + $\Delta$B1, B1 -> B2' = B2 + $\Delta$B2). Eine solche unerwünschte Beeinflussung der ersten und/oder zweiten Nutzkomponente $s1_N$, $s2_N$ (bzw. deren Amplituden $U1_N$, $U2_N$) bzw. Beeinträchtigung der Funktiontüchtigkeit der Sensoranordnung durch ein externes Magnetfeld kann beispielsweise auch darin bestehen, daß - wie auch in Fig. 3 angedeutet - zumindest eine der Nutzkomponenten eine zusätzliche frequenzgleiche Störkomponente ($S1_{N,\ Err}$, $S2_{N,\ Err}$) enthält, derart, daß der vorbezeichnete Phasenwinkel nämlicher Nutzkomponente, mithin auch die vorbezeichnete Phasendifferenz $\Delta\varphi12$ ($\Delta\varphi12$ -> $A\varphi12_{Err}$) dann einen Phasenfehler, nämlich einen vom externen Magnetfeld H1 bzw. dessen Einfluß auf den im jeweiligen Schwingungssensor letztlich etablierten magnetischen Fluß abhängig Anteil aufweist; dies beispielsweise auch derart, daß die Integrität zumindest eines der Schwingungsmeßsignale bzw. der der Massenstrom-Meßwerte inakzeptabel herabgesetzt ist bzw. daß nämlicher Phasenfehler eine Meßgenauigkeit, mit der die Umformerschaltung US die Massenstrom-Meßwerte dann ermittelt aus einem für das Coriolis-Massendurchfluß-Meßgerät spezifizierten Toleranzbereich führt.

Um ein möglichst zeitnahes Detektieren eines die Funktiontüchtigkeit der Sensoranordnung beeinträchtigenden externen Magnetfeldes H1 und/oder eines auf den Einfluß eines solchen externen Magnetfeldes H1 zurückzuführenden erhöhten, beispielsweise nämlich außerhalb einer Spezifikation des Coriolis-Massendurchfluß-Meßgeräts liegenden, Meßfehlers zu ermöglichen, ist die Umformerschaltung des erfindungsgemäßen Coriolis-Massendurchfluß-Meßgeräts ferner auch dafür eingerichtet, anhand der Schwingungsmeßsignale, zusätzlich zu den Massenstrom-Meßwerten, zumindest gelegentlich auch einen oder mehrere Kennzahlenwerte für wenigstens eine (erste) Sensoren-Kennzahl SK1 zu berechnen, derart, daß nämliche Sensoren-Kennzahl SK1 eine, beispielsweise mittlere oder momentane, Änderungsrate ($\Delta U1_N/\Delta t$; $\Delta U2_N/\Delta t$), mit der sich zumindest eine der Amplituden $U1_N$, $U2_N$ der ersten und zweiten Nutzkomponenten $s1_N$, $s2_N$ zeitlich ändert, bzw. ein Ausmaß der Änderung der Amplituden $U1_N$, $U2_N$ innerhalb eines vorgegeben Zeitintervalls $\Delta t$ im Verhältnis zur Dauer nämlichen Zeitintervalls $\Delta t$ repräsentiert, mithin für die Sensoren-Kennzahl SK1 gilt:

$$SK1 = f\left(\frac{\Delta U1_N}{\Delta t}\right)$$

und/oder

$$SK1 = f\left(\frac{\Delta U2_N}{\Delta t}\right);$$

dies beispielsweise auch derart, daß die Sensoren-Kennzahl SK1 eine zeitliche Veränderung der Sensoranordnung und/oder eine Abweichung der Sensoranordnung von einem Referenzzustand charakterisiert und/oder daß die Sensoren-Kennzahl SK1 die vorbezeichnete Änderungsrate quantifiziert. Die Sensoren-Kennzahl SK1 kann im Betrieb de Coriolis-Massendurchfluß-Meßgeräts wiederkehrend mittels der Umformerschaltung US ermittelt werden, beispielsweise anhand von für die Amplituden $U1_N$, $U2_N$ ermittelte digitale Amplitudenwerte bzw. der damit jeweils gebildeten ersten und zweiten Nutzkomponentenfolgen; alternativ oder in Ergänzung kann die Umformerschaltung ferner auch eingerichtet sein, anhand des Schwingungsmeßsignals s1 Kennzahlwerte für wenigstens eine Nutzkomponenten-Kennzahl, nämlich eine die erste Nutzkomponente $s1_N$ charakterisierende und/oder von der Amplitude $U1_N$ abhängige Kennzahl, beispielsweise nämlich einen Spitze-Spitze-Wert der Nutzkomponente $s1_N$ ($2 \cdot U1_N$) und/oder einen Effektivwert der Nutzkomponente $s1_N$ ($\sqrt{2} \cdot U1_N$) und/oder einen Gleichrichtwert der Nutzkomponente $s1_N$ ($2/\pi \cdot U1_N$), zu ermitteln sowie Kennzahlwerte für die Sensoren-Kennzahl SK1 unter Verwendung von für die erste Nutzkomponenten-Kennzahl ermittelte Kennzahlwerten zu berechnen bzw. kann die Umformerschaltung ferner eingerichtet sein, anhand des Schwingungsmeßsignals s2 Kennzahlwerte für wenigstens eine zweite Nutzkomponenten-Kennzahl, nämlich eine die Nutzkomponente $s2_N$ charakterisierende und/oder von der Amplitude $U2_N$ abhängige Kennzahl, beispielsweise nämlich einen Spitze-Spitze-Wert der Nutzkomponente $s2_N$ ($2 \cdot U2_N$) und/oder einen Effektivwert der Nutzkomponente $s2_N$ ($\sqrt{2} \cdot U2_N$) und/oder einen Gleichrichtwert der Nutzkomponente $s2_N$ ($2/\pi \cdot U2_N$), zu ermitteln sowie Kennzahlwerte für die Sensoren-Kennzahl SK1 unter Verwendung von für die zweite Nutzkomponenten-Kennzahl ermittelte Kennzahlwerten zu berechnen. Für den erwähnten Fall, daß in der Umformerschaltung US wenigstens ein nicht flüchtiger elektronischer Datenspeicher EEPROM vorgesehen ist kann die Umformerschaltung US zudem dafür eingerichtet sein, eingerichtet sein, einen oder mehrere der vorbezeichneten digitalen Amplitudenwerte $U1_N[m]$ bzw. $U2_N[n]$ und/oder einen oder mehrere Kennzahlenwerte für die ersten und/oder zweiten Nutzkomponenten-Kennzahlen in nämlichem Datenspeicher EEPROM zu speichern, beispielsweise auch jeweils zusammen mit einem Zahlenwert für eine einen jeweiligen Zeitpunkt des Ermittelns des jeweiligen Kennzahlenwerts entsprechenden Zeitvariable (Zeitstempel).

Für den vorbezeichneten Fall, daß die mittels der Umformerschaltung US die ersten und zweiten Nutzkomponentenfolgen ($U1_N[m]$, $U2_N[n]$) generiert werden, können die Kennzahlenwerte für die Sensoren-Kennzahl SK1 beispielsweise sehr einfach auch unter Verwendung der ersten Nutzkomponentenfolge und/oder der zweiten Nutzkomponentenfolge, ggf. auch anhand von im Datenspeicher EEPROM abgespeicherten digitalen Amplitudenwerte $U1_N[m]$ bzw. $U2_N[n]$, berechnet werden, beispielsweise indem mittels der Umformerschaltung US bzw. deren vorbezeichneter Meß- und Steuerelektronik DSV anhand der ersten Nutzkomponentenfolge die Änderungsrate $\Delta U1_N/\Delta t$ der Amplitude $U1_N$ basierend auf der Berechnungsvorschrift:

$$\frac{\Delta U1_N}{\Delta t} = \frac{U1_N[m+1] - U1_N[m]}{t_{m+1} - t_m}$$

und/oder anhand der zweiten Nutzkomponentenfolge die Änderungsrate $\Delta U2_N/\Delta t$ der Amplitude $U2_N$ basierend auf der Berechnungsvorschrift:

$$\frac{\Delta U2_N}{\Delta t} = \frac{U2_N[n+1] - U2_N[n]}{t_{n+1} - t_n}$$

gebildet wird.

Nach einer weiteren Ausgestaltung der Erfindung ist die Umformerschaltung eingerichtet, die Sensoren-Kennzahl SK1 so zu ermitteln, daß diese eine Änderungsrate $\Delta U_{12}/\Delta t$ repräsentiert, mit der sich ein - gelegentlich auch als Sensor-Asymmetrie bezeichneter - Unterschied, beispielsweise nämlich eine Differenz $U_{12}$ ($U_{12} = U1_N - U2_N$) zwischen den Amplituden $U1_N$, $U2_N$ der ersten und zweiten Nutzkomponenten $s1_N$, $s2_N$, bzw. deren Betrag zeitlich ändert; dies beispielsweise derart, daß die Sensor-Kennzahl SK1 eine solche Änderungsrate $\Delta U^*_{12}/\Delta t$ repräsentiert, mit der eine normierte Differenz $\Delta U^*_{12}$, nämlich die vorbezeichnete Differenz $U_{12}$, normiert auf eine der Amplituden $U1_N$, $U2_N$ oder auf einen Mittelwert $0{,}5 \cdot (U1_N + U2_N)$ der Amplituden $U1_N$, $U2_N$ bzw. deren Betrag zeitlich ändert, mithin die Sensoren-Kennzahl SK1 eine der Bedingung:

$$SK1 = \frac{\Delta U_{12}}{U1_N \cdot \Delta t} \quad bzw. \quad SK1 = \left| \frac{\Delta U_{12}}{U1_N \cdot \Delta t} \right| \quad bzw. \quad SK1 = \left| \frac{1}{M} \sum_{i=1}^{M} \frac{\Delta U_{12,i}}{U1_{N,i} \cdot \Delta t} \right|,$$

$$SK1 = \frac{\Delta U_{12}}{U2_N \cdot \Delta t} \quad bzw. \quad SK1 = \left| \frac{\Delta U_{12}}{U2_N \cdot \Delta t} \right| \quad bzw. \quad SK1 = \left| \frac{1}{M} \sum_{i=1}^{M} \frac{\Delta U_{12,i}}{U2_{N,i} \cdot \Delta t} \right|$$

oder

$$SK1 = 2 \cdot \frac{\Delta U_{12}}{(U1_N + U2_N) \cdot \Delta t} \quad \text{bzw.} \quad SK1 = \left| 2 \cdot \frac{\Delta U_{12}}{(U1_N + U2_N) \cdot \Delta t} \right| \quad \text{bzw.}$$

$$SK1 = \left| \frac{2}{M} \cdot \sum_{i=1}^{M} \frac{\Delta U_{12,i}}{(U1_{N,i} + U2_{N,i}) \cdot \Delta t} \right|$$

erfüllt. Alternativ oder in Ergänzung kann die Umformerschaltung US ferner eingerichtet sein, die Sensoren-Kennzahl SK1 so zu ermitteln, daß sie die vorbezeichnete Differenz $U_{12}$, normiert auf eine Summe $U1_N + U2_N$ der Amplituden $U1_N$, $U2_N$, bzw. einen entsprechenden Betrag repräsentiert, beispielsweise nämlich eine Bedingung:

$$SK1 = \frac{\Delta U_{12}}{(U1_N + U2_N) \cdot \Delta t} \quad \text{bzw.} \quad SK1 = \left| \frac{\Delta U_{12}}{(U1_N + U2_N) \cdot \Delta t} \right| \quad \text{bzw.} \quad SK1 = \left| \frac{1}{M} \cdot \sum_{i=1}^{M} \frac{\Delta U_{12,i}}{(U1_{N,i} + U2_{N,i}) \cdot \Delta t} \right|$$

erfüllt, oder daß sie beispielsweise eine hinsichtlich eines jeweiligen Betrags größte von zwei, insb. mittleren oder momentanen, Änderungsraten $\Delta U1_N/\Delta t$, $\Delta U2_N/\Delta t$ repräsentiert, mit der die Amplituden $U1_N$, $U2_N$ der ersten und zweiten Nutzkomponenten $s1_N$, $s2_N$ zeitlich ändern, mithin die Sensoren-Kennzahl SK1 die Bedingung:

$$SK1 = Max\left( \left| \frac{\Delta U1_N}{\Delta t} \right|, \left| \frac{\Delta U2_N}{\Delta t} \right| \right)$$

erfüllt.

Es hat sich ferner gezeigt, daß nicht zuletzt auch solche externen Magnetfelder die Funktionstüchtigkeit der Sensoranordnung beeinträchtigen, mithin für die Detektion von besonderem Interesse sein können, die nur sporadisch auftreten und/oder nur sehr langsam bzw. nur gelegentlich ändern, beispielsweise nämlich Folge von Schaltvorgänge innerhalb einer in der Nähe des Coriolis-Massendurchfluß-Meßgeräts stationierten elektrischen Starkstromanlage oder eines lediglich vorübergehend in der Nähe des Coriolis-Massendurchfluß-Meßgeräts befindlichen Permanent- und/oder Elektromagneten sind. Einhergehend mit solchen externen Magnetfeldern ändern sich auch die vorbezeichneten, in den Nutzkomponenten jeweils enthaltenen Störkomponenten bzw. damit einhergehend auch die Amplituden $U1_N$ bzw. $U2_N$ entsprechend langsam. Um bei der Ermittlung der Sensoren-Kennzahl SK1 besonders auch derartige Magnetfelder bzw. deren Einflußnahme auf die Sensoranordnung möglichst einfach und fehlerfrei detektieren bzw. vermelden zu können, ist die Umformerschaltung US nach einer weiteren Ausgestaltung der Erfindung ferner dafür eingerichtet, die vorbezeichneten ersten und zweiten Nutzkomponentenfolgen so zu generieren, daß solche spektrale Anteile der zeitlich ändernden Amplitude $U1_N$ in der ersten Nutzkomponentenfolge bzw. solche spektrale Anteile der zeitlich ändernden Amplitude $U2_N$ in der zweiten Nutzkomponentenfolge enthalten sind, die jeweils kleiner als ein vorgegebener, beispielsweise 1 Hz betragender, Frequenzwert sind, und/oder daß solche spektrale Anteile der zeitlich ändernden Amplitude $U1_N$ in der ersten Nutzkomponentenfolge bzw. solche spektrale Anteile der zeitlich ändernden Amplitude $U2_N$ in der zweiten Nutzkomponentenfolge jeweils zumindest nicht enthalten sind, die jeweils größer als ein vorgegebener, beispielsweise 5 Hz betragender, untere Frequenzwert und die jeweils kleiner jeweils als ein vorgegebener, beispielsweise 40 Hz betragender, oberer Frequenzwert sind.

Zum Detektieren des Vorliegens eines die Funktionstüchtigkeit der Sensoranordnung, mithin die Meßgenauigkeit des Coriolis-Massendurchfluß-Meßgeräts beeinträchtigenden externen Magnetfeldes ist die Umformerschaltung US gemäß einer weiteren Ausgestaltung der Erfindung ferner eingerichtet, einen oder mehrere Kennzahlenwerte für die wenigstens eine Sensoren-Kennzahl SK1 auszuwerten, beispielsweise nämlich jeweils mit einem oder mehreren für die nämliche Sensoren-Kennzahl SK1 vorab ermittelten, beispielsweise nämlich in vorbezeichnetem nicht flüchtigen elektronischen Datenspeicher EEPROM gespeicherten, Bezugswerten $BK1_1$ ($BK1_1$, $BK1_2$,...$BK1_i$...) zu vergleichen. Dementsprechend ist die Umformerschaltung US ferner auch dafür eingerichtet, zu ermitteln, ob ein oder mehrere Kennzahlenwerte für die Sensoren-Kennzahl SK1 größer als einer oder mehrere solcher, beispielsweise nämlich ein nicht mehr intaktes Coriolis-Massendurchfluß-Meßgerät repräsentierende, Bezugswerte für die Sensoren-Kennzahl SK1 ist und ggf. beispielsweise auch eine dies signalisierende (Störungs-)Meldung auszugeben, beispielsweise nämlich vor Ort anzuzeigen und/oder als Statusmeldung an das vorbezeichnete elektronischen Datenverarbeitungssystem zu übermitteln. Bei den vorbezeichneten Bezugswerten für die Sensoren-Kennzahl SK1 kann es sich beispielsweise um eine (auf ein externes Magnetfeld zurückzuführende) verminderte Funktionstüchtigkeit der Sensoranordnung bzw. eine (auf ein externes Magnetfeld zurückzuführende) Fehlfunktion der Sensoranordnung repräsentierende Bezugswerte handeln. Nämliche Bezugswerte können beispielsweise vorab, beispielsweise nämlich vom Hersteller des Coriolis-Massendurchfluß-Meßgeräts bzw. bei einer während der Herstellung des Coriolis-Massendurchfluß-Meßgeräts vollzogenen (Werks-)Kalibrierung und/oder während der Inbetriebnahme vor Ort, und/oder im Betrieb des Coriolis-Massendurchfluß-Meßgeräts ermittelt werden; dies beispielsweise, derart, daß zunächst die jeweilige Sensoren-Kennzahl SK1 für das fertiggestellte, mithin intakte Coriolis-Massendurchfluß-Meßgerät ermittelt und mit einem einer noch tolerierbaren Beeinflussung entsprechenden Toleranzwert entsprechend in den Bezugswert $BK1_1$ umgerechnet wird und/oder indem die Sensoren-Kennzahl SK1 mittels des in der Nähe eines ein Referenz-Magnetfeld bewirkenden Magneten positionierten, ansonsten aber intakten Coriolis-Massendurchfluß-Meßgeräts direkt ermittelt und als Bezugswert $BK1_1$ im Datenspeicher EEPROM abgespeichert wird. Für den vorbezeichneten Fall, daß die Sensor-Kennzahl SK1 die Änderungsrate

$\Delta U_{12}^* / \Delta t$ (der normierten normierte Differenz $\Delta U_{12}^*$) repräsentiert, kann der zughörige wenigstens eine Bezugswert beispielsweise auf 10 % / 1 min festgelegt sein. Um zudem auch die Anwesenheit eines besonders schädlichen, nämlich langsam ändernden externen Magnetfelds bzw. dessen Einflußnahme auf die Sensoranordnung sicher detektieren und ggf. auch sicher vermelden zu können bzw. umgekehrt unerwünschte Fehlalarme möglichst ausschließen zu können, ist die Umformerschaltung US nach einer weiteren Ausgestaltung der Erfindung ferner dafür eingerichtet, die Sensor-Kennzahl SK1 sowohl mit einem unteren ersten Bezugswert $BK1_1$, beispielsweise nämlich 10 % / 1 min, als auch mit einem vom Bezugswert BK1 verschiedenen oberen zweiten Bezugswert $BK1_2$ für die Sensoren-Kennzahl SK1, beispielsweise 10 % / 1s, zu vergleichen und (lediglich) für den Fall, daß die Sensor-Kennzahl SK1 zwar größer als der Bezugswert $BK1_1$, jedoch kleiner als der Bezugswert $BK1_2$ ist, die vorbezeichnete Störungsmeldung auszugeben.

Zwecks Erhöhung der Verläßlichkeit der wenigstens einen Sensoren-Kennzahl SK1 bzw. der darauf basierenden Detektion eines externen Magnetfeldes ist die Umformerschaltung US nach einer weiteren Ausgestaltung der Erfindung ferner eingerichtet, auch das vorbezeichnete Temperaturmeßsignal auszuwerten, nämlich die Kennzahlenwerte für die wenigstens eine Sensoren-Kennzahl SK1 auch anhand des Temperaturmeßsignals zu berechnen, beispielsweise nämlich die, u.a. auch in den eingangs erwähnten WO-A 2009/148451, WO-A 2018/007176 oder WO-A 2018/007185 erörterten, Einflüsse der Temperatur des Meßstoffs bzw. des Verdrängerelements auf die Schwingungsmeßsignale entsprechend zu berücksichtigen bzw. zu kompensieren. Alternativ oder in Ergänzung kann die Umformerschaltung US zur Verbesserung der Detektion externer Magnetfelder auch noch weitere auf den Nutzkomponenten basierende Sensoren-Kennzahlen ermitteln. Dementsprechend ist die Umformerschaltung US nach einer weiteren Ausgestaltung der Erfindung zudem eingerichtet, anhand der Schwingungsmeßsignale s1, s1 auch Kennzahlenwerte für wenigstens eine - beispielsweise analog zur Sensoren-Kennzahl SK1 eine Funktionstüchtigkeit der Sensoranordnung und/oder eine zeitliche Veränderung der Sensoranordnung und/oder eine Abweichung der Sensoranordnung von einem Referenzzustand charakterisierende - zweite Sensoren-Kennzahl SK2 zu berechnen, derart, daß nämliche Sensoren-Kennzahl SK2 einen Unterschied $U_{12}$ zwischen der Amplitude $U1_N$ und der Amplitude $U2_N$ (Sensor-Asymmtrie) repräsentiert, beispielsweise nämlich von nämlichem Unterschied $U_{12}$ abhängig ist und/oder diesen quantifiziert. Als Sensoren-Kennzahl SK2 kann beispielsweise auch die vorbezeichnete normierte Differenz $\Delta U_{12}^*$ dienen.

Darüberhinaus kann die Umformerschaltung US ferner eingerichtet sein, einen oder mehrere der Kennzahlenwerte für die Sensoren-Kennzahl SK2 beispielsweise nämlich die vorbezeichnete Differenz $U_{12}$, jeweils mit wenigstens einem Bezugswert $BK2_1$ für die Sensoren-Kennzahl SK2 zu vergleichen, beispielsweise nämlich zu ermitteln, ob ein oder mehrere Kennzahlenwerte für die Sensoren-Kennzahl SK2 größer nämlicher Bezugswert $BK2_1$ ist und zumindest dann auch eine ein nicht mehr intaktes Coriolis-Massendurchfluß-Meßgerät signalisierende Störungs-Meldung auszugeben, beispielsweise nämlich vor Ort anzuzeigen und/oder als Statusmeldung an das vorbezeichnete elektronischen Datenverarbeitungssystem zu übermitteln, falls auch die Sensoren-Kennzahl SK2 größer als der wenigstens eine zugehörige Bezugswert $BK2_1$ ist. Der wenigstens eine Bezugswert $BK2_1$ kann ebenfalls vorab, beispielsweise nämlich in gleicher Weise wie der wenigstens eine Bezugswert $BK1_1$ für die Sensoren-Kennzahl SK1 vom Hersteller des Coriolis-Massendurchfluß-Meßgeräts bzw. bei einer während der Herstellung des Coriolis-Massendurchfluß-Meßgeräts vollzogenen (Werks-)Kalibrierung ermittelt und beispielsweise auch im vorbezeichneten nicht flüchtigen elektronischen Datenspeicher EEPROM abgespeichert sein.

Um die Verläßlichkeit der Sensoren-Kennzahl SK2 zu erhöhen, beispielsweise nämlich die, u.a. auch in den eingangs erwähnten WO-A 2009/148451, WO-A 2018/007176 oder WO-A 2018/007185 erörterten, Einflüsse der Temperatur des Meßstoffs bzw. des Verdrängerelements auf die Schwingungsmeßsignale bzw. deren Asymmetrie entsprechend zu berücksichtigen bzw. zu kompensieren, ist die Umformerschaltung US nach einer weiteren Ausgestaltung der Erfindung ferner eingerichtet, die Kennzahlenwerte für die eine Sensoren-Kennzahl SK2 auch anhand des Temperaturmeßsignals zu berechnen.

Die Ermittlung der Kennzahlenwerte SK1 und ggf. auch der Kennzahlenwerte SK2 bzw. das Ermitteln des Vorliegens eines externen Magnetfeldes kann beispielsweise automatisiert, beispielsweise nämlich zeitgesteuert und/oder auch in Abhängigkeit von Änderungen von anderen Diagnosewerten, initiiert bzw. wieder ausgesetzt werden. Alternativ oder in Ergänzung kann die Ermittlung der Kennzahlenwerte aber auch von extern des Coriolis-Massendurchfluß-Meßgeräts initiiert und/oder ausgesetzt werden, beispielsweise nämlich ausgehend von vorbezeichnetem elektronischen Datenverarbeitungssystem über die vorbezeichnete Sende- und Empfangselektronik COM und/oder ausgehend von Bedienpersonal vor Ort über die vorbezeichnete Anzeige- und Bedienelement HMI. Dementsprechend ist die Umformerschaltung nach einer weiteren eingerichtet ist, einen zumindest die Ermittlung der Kennzahlenwerte für zumindest die Sensoren-Kennzahl SK1, ggf. nämlich auch deren vorbezeichnete Auswertung initiierenden Start-Befehl zu empfangen und auszuwerten, nämlich einen Eingang des Start-Befehls zu detektieren und daraufhin eine Ermittlung der Kennzahlenwerte für die erste Sensoren-Kennzahl SK1 in Gang zu setzen und/oder ist die Umformerschaltung eingerichtet, einen die Ermittlung der Kennzahlenwerte für die Sensoren-Kennzahl SK1 zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl SK1 zumindest vorübergehend anzuhalten.

## Patentansprüche

1. Coriolis-Massendurchfluß-Meßgerät, insb. Coriolis-Massendurchfluß-/Dichte-Meßgerät, zum Messen eines Massenstroms eines fluiden Meßstoff - insb. eines Gases, einer Flüssigkeit oder einer Dispersion -, welches Coriolis-Massendurchfluß-Meßgerät umfaßt:

   - einen Meßaufnehmer, der wenigstens ein Vibrationselement, eine Erregeranordnung sowie eine Sensoranordnung aufweist und der eingerichtet ist, den Meßstoff zu führen, nämlich zumindest zeitweise vom Meßstoff durchströmt zu werden;
   - sowie eine mit dem Meßaufnehmer, nämlich sowohl mit dessen Erregeranordnung als auch dessen Sensoranordnung elektrisch gekoppelte, insb. mittels wenigstens eines Mikroprozessors gebildete, elektronische Umformerschaltung;
   - wobei das wenigstens eine Vibrationselement eingerichtet ist, von strömendem Meßstoff kontaktiert und währenddessen, insb. mit wenigstens einer Resonanzfrequenz, vibrieren gelassen zu werden;
   - wobei die Erregeranordnung eingerichtet ist, dorthin eingespeiste elektrische Leistung in erzwungene mechanische Schwingungen des Vibrationselements bewirkende mechanische Leistung zu wandeln;
   - wobei die Umformerschaltung eingerichtet ist, ein elektrisches Treibersignal zu generieren und damit elektrische Leistung in die Erregeranordnung einzuspeisen, derart, daß das Vibrationselement zumindest anteilig Nutzschwingungen, nämlich erzwungene mechanische Schwingungen mit wenigstens einer Nutzfrequenz, nämlich einer durch das elektrische Treibersignal vorgegebenen, insb. einer Resonanzfrequenz des Meßaufnehmers entsprechenden, Schwingungsfrequenz ausführt, die geeignet sind, im strömendem Meßstoff vom Massenstrom abhängige Corioliskräfte zu bewirken;
   - wobei die Sensoranordnung zum Erfassen mechanischer Schwingungen des wenigstens einen Vibrationselements, insb. dessen Nutzschwingungen, einen elektrodynamischen ersten Schwingungssensor (51) und wenigstens einen, insb. zum ersten Schwingungssensor (51) baugleichen, elektrodynamischen zweiten Schwingungssensor (52) aufweist,

      -- wobei der erste Schwingungssensor (51) eingerichtet ist, Schwingungsbewegungen des wenigstens einen Vibrationselements an einem ersten Meßpunkt in ein elektrisches erstes Schwingungsmeßsignal der Sensoranordnung zu wandeln, derart, daß nämliches erstes Schwingungsmeßsignal wenigstens eine erste Nutzkomponente, nämlich eine Wechselspannungskomponente

         --- mit einer der Nutzfrequenz entsprechenden Frequenz,
         --- und mit einer von der Nutzfrequenz und einem ersten magnetischen Fluß ($\Phi$1), nämlich einem magnetischen Fluß durch den ersten Schwingungssensor (51) abhängigen Amplitude aufweist,

      -- und wobei der zweite Schwingungssensor (52) eingerichtet ist, Schwingungsbewegungen des wenigstens einen Vibrationselements an einem vom ersten Meßpunkt entfernten zweiten Meßpunkt in ein elektrisches zweites Schwingungsmeßsignal der Sensoranordnung zu wandeln, derart, daß nämliches zweites Schwingungsmeßsignal wenigstens eine zweite Nutzkomponente, nämlich eine Wechselspannungskomponente

--- mit einer der Nutzfrequenz entsprechenden Frequenz,

--- und mit einer von der Nutzfrequenz und einem zweiten magnetischen Fluß ($\Phi 2$), nämlich einem Magnetischer Fluß durch den zweiten Schwingungssensor (52) abhängigen Amplitude aufweist;

- und wobei die Umformerschaltung eingerichtet ist, die ersten und zweiten Schwingungsmeßsignale zu empfangen und auszuwerten, nämlich anhand der ersten und zweiten Schwingungsmeßsignale den Massenstrom repräsentierende, insb. digitale, Massenstrom-Meßwerte zu ermitteln;

**dadurch gekennzeichnet,**

- **daß** die Umformerschaltung eingerichtet ist, Kennzahlenwerte für wenigstens eine, insb. eine Funktionstüchtigkeit der Sensoranordnung und/oder eine zeitliche Veränderung der Sensoranordnung und/oder eine Abweichung der Sensoranordnung von einem Referenzzustand charakterisierende, Sensoren-Kennzahl zu berechnen, derart, daß nämliche Sensoren-Kennzahl eine, insb. mittlere oder momentane, Änderungsrate, mit der sich zumindest eine der Amplituden der ersten und zweiten Nutzkomponenten, insb. nämlich ein Unterschied zwischen den Amplitude der ersten und zweiten Nutzkomponenten, zeitlich ändert, repräsentiert, insb. nämlich von der Änderungsrate abhängig ist und/oder die Änderungsrate quantifiziert,
- **und daß** die Umformerschaltung eingerichtet ist, einen oder mehrere Kennzahlenwerte für die Sensoren-Kennzahl jeweils mit einem oder mehreren für die Sensoren-Kennzahl, insb. vom Hersteller des Coriolis-Massendurchfluß-Meßgeräts und/oder bei der Herstellung des Coriolis-Massendurchfluß-Meßgerät, ermittelten Bezugswerten ($BK1_1$, $BK1_2$), insb. einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten, zu vergleichen.

2. Coriolis-Massendurchfluß-Meßgerät nach einem der vorherigen Ansprüche,

   - wobei die Umformerschaltung eingerichtet ist, einen zumindest die Ermittlung der Kennzahlenwerte zumindest für die erste Sensoren-Kennzahl (SK1) initiierenden Start-Befehl zu empfangen und auszuwerten, nämlich einen Eingang des Start-Befehls zu detektieren und daraufhin eine Ermittlung der Kennzahlenwerte für die erste Sensoren-Kennzahl (SK1) in Gang zu setzen; und/oder
   - wobei die Umformerschaltung eingerichtet ist, einen die Ermittlung der Kennzahlenwerte für die erste Sensoren-Kennzahl (SK1) zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl SK1 zumindest vorübergehend anzuhalten.

3. Coriolis-Massendurchfluß-Meßgerät nach einem der vorherigen Ansprüche, wobei die Sensoren-Kennzahl eine, insb. hinsichtlich eines jeweiligen Betrags, größte von zwei, insb. mittleren oder momentanen, Änderungsraten repräsentiert, mit der die Amplituden der ersten und zweiten Nutzkomponenten zeitlich ändern.

4. Coriolis-Massendurchfluß-Meßgerät nach einem der vorherigen Ansprüche, wobei die Sensoren-Kennzahl eine, insb. mittlere oder momentane, Änderungsrate repräsentiert, mit der ein Unterschied, insb. nämlich eine Differenz, zwischen der Amplitude der ersten Nutzkomponente und der Amplitude der zweiten Nutzkomponente zeitlich ändert.

5. Coriolis-Massendurchfluß-Meßgerät nach einem der vorherigen Ansprüche, wobei die Sensor-Kennzahl eine, insb. mittlere oder momentane, Änderungsrate repräsentiert, mit der eine, insb. auf eine der Amplituden der ersten und zweiten Nutzkomponente normierte oder auf eine Summe der Amplituden ersten und zweiten Nutzkomponente normierte oder auf einen Mittelwert der Amplituden der ersten und zweiten Nutzkomponente normierte, Differenz zwischen den Amplituden der ersten und zweiten Nutzkomponenten zeitlich ändert.

6. Coriolis-Massendurchfluß-Meßgerät nach einem der vorherigen Ansprüche, wobei die Umformerschaltung eingerichtet ist, zu ermitteln, ob eine oder mehrere Kennzahlenwerte für die Sensoren-Kennzahl größer als der wenigstens eine Bezugswert für die Sensoren-Kennzahl ist, insb. nämlich falls ein oder mehrere Kennzahlenwerte für die Sensoren-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist, eine dies signalisierende Meldung auszugeben.

7. Coriolis-Massendurchfluß-Meßgerät nach einem der vorherigen Ansprüche,

- wobei die Umformerschaltung eingerichtet ist, anhand des, insb. digitalisierten, ersten Schwingungsmeßsignals Kennzahlwerte für wenigstens eine erste Nutzkomponenten-Kennzahl, nämlich eine die erste Nutzkomponente charakterisierende und/oder von der Amplitude der ersten Nutzkomponente abhängige Kennzahl, insb. nämlich einen Spitzenwert der ersten Nutzkomponente und/oder einen Effektivwert der ersten Nutzkomponente und/oder einen Gleichrichtwert der ersten Nutzkomponente und/oder eine Schwingungsbreite der ersten Nutzkomponente, zu ermitteln, insb. nämlich Kennzahlwerte für die wenigstens eine Sensoren-Kennzahl unter Verwendung von für die erste Nutzkomponenten-Kennzahl ermittelte Kennzahlwerten zu berechnen; und/oder
- wobei die Umformerschaltung eingerichtet ist, anhand des, insb. digitalisierten, zweiten Schwingungsmeßsignals Kennzahlwerte für wenigstens eine zweite Nutzkomponenten-Kennzahl, nämlich eine die zweite Nutzkomponente charakterisierende und/oder von der Amplitude der zweiten Nutzkomponente abhängige Kennzahl, insb. nämlich einen Spitze-Spitze-Wert der zweiten Nutzkomponente und/oder einen Effektivwert der zweiten Nutzkomponente und/oder einen Gleichrichtwert der zweiten Nutzkomponente und/oder eine Schwingungsbreite der zweiten Nutzkomponente, zu ermitteln, insb. nämlich Kennzahlwerte für die wenigstens eine Sensoren-Kennzahl unter Verwendung von anhand von für die zweite Nutzkomponenten-Kennzahl ermittelten Kennzahlwerten zu berechnen.

8. Coriolis-Massendurchfluß-Meßgerät nach einem der vorherigen Ansprüche, wobei die Umformerschaltung einen nicht-flüchtigen elektronischen Datenspeicher aufweist, der dafür eingerichtet ist, digitale Daten, insb. auch ohne eine angelegte Betriebsspannung, vorzuhalten, insb. nämlich einen oder mehrere vorab ermittelte Bezugswerte für die Sensoren-Kennzahl zu speichern.

9. Coriolis-Massendurchfluß-Meßgerät nach dem vorherigen Anspruch, wobei im elektronischen Datenspeicher ein oder mehrere, insb. vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Sensoren-Kennzahl, insb. nämlich ein oder mehrere eine verminderte Funktionstüchtigkeit der Sensoranordnung repräsentierende Bezugswerte und/oder nämlich ein oder mehrere eine Fehlfunktion der Sensoranordnung repräsentierende Bezugswerte, gespeichert sind.

10. Coriolis-Massendurchfluß-Meßgerät nach einem der vorherigen Ansprüche,

- wobei die Sensoranordnung zum Erfassen einer Temperatur des Meßaufnehmers an einem Temperatur-Meßpunkt wenigstens einen Temperatursensor (61) aufweist, der eingerichtet ist, ein Temperaturmeßsignal, nämlich ein die Temperatur am Temperatur-Meßpunkt repräsentierendes Meßsignal, insb. mit einer von der Temperatur abhängigen elektrischen Spannung und/oder einem von der Temperatur abhängigen elektrischen Strom, bereitzustellen;
- und wobei die Umformerschaltung eingerichtet ist, auch das Temperaturmeßsignal zu empfangen und auszuwerten, nämlich die Kennzahlenwerte für die wenigstens eine Sensoren-Kennzahl (SK1) auch anhand des Temperaturmeßsignals zu berechnen.

11. Coriolis-Massendurchfluß-Meßgerät nach einem der vorherigen Ansprüche, wobei die Umformerschaltung eingerichtet ist, anhand der ersten und zweiten Schwingungsmeßsignale Kennzahlenwerte für wenigstens eine, insb. eine Funktionstüchtigkeit der Sensoranordnung und/oder eine zeitliche Veränderung der Sensoranordnung und/oder eine Abweichung der Sensoranordnung von einem Referenzzustand charakterisierende, zweite Sensoren-Kennzahl (SK2) zu berechnen, derart, daß nämliche zweite Sensoren-Kennzahl einen Unterschied zwischen der Amplitude der ersten und zweiten Nutzkomponente repräsentiert, insb. nämlich von dem Unterschied abhängig ist und/oder den Unterschied quantifiziert.

12. Coriolis-Massendurchfluß-Meßgerät nach dem vorherigen Anspruch, wobei die zweite Sensor-Kennzahl (SK2) eine, insb. auf eine der Amplituden der ersten und zweiten Nutzkomponente normierte oder auf eine Summe der Amplituden ersten und zweiten Nutzkomponente normierte oder auf einen Mittelwert der Amplituden der ersten und zweiten Nutzkomponente normierte, Differenz zwischen den Amplituden der ersten und zweiten Nutzkomponenten repräsentiert.

**13.** Coriolis-Massendurchfluß-Meßgerät nach einem der vorherigen Ansprüche,

- wobei die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist; und/oder
- wobei der erste Schwingungssensor mittels einer ersten Tauchspule und der zweite Schwingungssensor mittels einer zweiten Tauchspule gebildet ist; und/oder
- wobei die Erregeranordnung zum Anregen von Schwingungen des wenigstens eine Meßrohrs einen, insb. elektrodynamischen und/oder einzigen, Schwingungserreger (41) aufweist; und/oder
- wobei das wenigstens eine Vibrationselement mittels wenigstens eines, insb. zumindest abschnittsweise geraden und/oder zumindest abschnittsweise kreisbogenförmigen, Rohrs mit einem von einer, insb. metallischen, Rohrwand und einem davon umhüllten Lumen gebildet und dafür eingerichtet ist, von Meßstoff durchströmt und währenddessen vibrieren gelassen zu werden.

**14.** Coriolis-Massendurchfluß-Meßgerät nach einem der vorherigen Ansprüche,

- wobei jede der ersten und zweiten Nutzkomponenten jeweils einen vom Massenstrom abhängigen Phasenwinkel aufweist;
- und wobei die Umformerschaltung eingerichtet ist, die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen.

**Claims**

**1.** A Coriolis mass flow meter, in particular a Coriolis mass flow/density meter, for measuring a mass flow of a fluid substance to be measured - in particular of a gas, a liquid or a dispersion -, which Coriolis mass flow meter comprises:

- a sensing element which has at least one vibration element, an exciter assembly and a sensor assembly and which is designed to guide the substance to be measured, that is to say to be flowed through at least temporarily by the substance to be measured;
- and an electronic transformer circuit electrically coupled to the sensing element, that is to say both to its exciter assembly and its sensor assembly, and formed, in particular, by means of at least one microprocessor;
- wherein the at least one vibration element is designed to be contacted by flowing substance to be measured and to be vibrated during the process, in particular with at least one resonance frequency;
- wherein the exciter assembly is designed to convert electrical power fed thereto into mechanical power producing forced mechanical vibrations of the vibration element;
- wherein the transformer circuit is designed to generate an electric driver signal and thereby to feed electrical power to the exciter assembly such that the vibration element at least proportionally produces useful vibrations, that is to say forced mechanical vibrations with at least one useful frequency, that is to say a vibration frequency specified by the electric driver signal, in particular corresponding to a resonance frequency of the sensing element, which vibrations are suitable for producing Coriolis forces based on the mass flow in the flowing substance to be measured;
- wherein, in order to detect mechanical vibrations of the at least one vibration element, in particular its useful vibrations, the sensor assembly has an electrodynamic first vibration sensor (51) and at least one electrodynamic second vibration sensor (52) which is, in particular, structurally identical to the first vibration sensor (51),

-- wherein the first vibration sensor (51) is designed to convert vibrational movements of the at least one vibration element at a first measurement point into an electric first vibration measurement signal of the sensor assembly such that said first vibration measurement signal has at least one first useful component, that is to say an AC voltage component

--- with a frequency corresponding to the useful frequency,
--- and with an amplitude depending on the useful frequency and a first magnetic flow ($\Phi1$), that is to say a magnetic flow through the first vibration sensor (51),

-- and wherein the second vibration sensor (52) is designed to convert vibrational movements of the at least one vibration element at a second measurement point remote from the first measurement point into an electric second vibration measurement signal of the sensor assembly such that said second vibration measurement signal has at least one second useful component, that is to say an AC voltage component

--- with a frequency corresponding to the useful frequency,
--- and with an amplitude depending on the useful frequency and a second magnetic flow ($\Phi2$), that is to say a magnetic flow through the second vibration sensor (52);

- and wherein the transformer circuit is designed to receive and evaluate the first and second vibration measurement signals, that is to say to ascertain, in particular digital, mass flow measurement values representing the mass flow by reference to the first and second vibration measurement signals;
**wherein,**
- the transformer circuit is designed to calculate characteristic number values for at least one sensor characteristic number, in particular characterizing a functionality of the sensor assembly and/or a temporary adjustment of the sensor assembly and/or a deviation of the sensor assembly from a reference state, such that said sensor characteristic number represents an, in particular average or instantaneous, rate of change at which at least one of the amplitudes of the first and second useful components, that is to say in particular a distinction between the amplitude of the first and second useful components, changes over time, that is to say in particular depends on the rate of change and/or quantifies the rate of change,
- and wherein the transformer circuit is designed to compare one or more characteristic number values for the sensor characteristic number in each case with one or more reference values ($BK1_1$, $BK1_2$) ascertained for the sensor characteristic number, in particular by the manufacturer of the Coriolis mass flow meter and/or during the manufacture of the Coriolis mass flow meter, in particular one or more reference values representing a reduced functionality of the sensor assembly and/or one or more reference values representing a malfunction of the sensor assembly and/or one or more reference values representing a Coriolis mass flow meter that is no longer intact.

2. The Coriolis mass flow meter as claimed in one of the preceding claims,

- wherein the transformer circuit is designed to receive and evaluate a start command initiating at least the ascertainment of the characteristic number values at least for the first sensor characteristic number (SK1), that is to say to detect an input of the start command and then to set in motion ascertainment of the characteristic number values for the first sensor characteristic number (SK1); and/or
- wherein the transformer circuit is designed to receive and evaluate a stop command at least temporarily discontinuing the ascertainment of the characteristic number values for the first sensor characteristic number (SK1), that is to say to detect an input of the stop command and then to temporarily suspend ascertainment of the characteristic number values for the first sensor characteristic number (SK1).

3. The Coriolis mass flow meter as claimed in one of the preceding claims, wherein the sensor characteristic number represents an, in particular in view of a respective amount, larger of two, in particular average or instantaneous, rates of change at which the amplitudes of the first and second useful components change over time.

4. The Coriolis mass flow meter as claimed in one of the preceding claims, wherein the sensor characteristic number represents an, in particular average or instantaneous, rate of change at which a distinction, that is to say in particular a difference, between the amplitude of the first useful component and the amplitude of the second useful component changes over time.

5. The Coriolis mass flow meter as claimed in one of the preceding claims, wherein the sensor characteristic number represents an, in particular average or instantaneous, rate of change at which a difference between the amplitudes of the first and second useful components changes over time, this difference in particular being normalized to one of the amplitudes of the first and second useful components or normalized to a sum of the amplitudes of the first and second useful components or normalized to an average of the amplitudes of the first and second useful components.

6. The Coriolis mass flow meter as claimed in one of the preceding claims, wherein the transformer circuit is designed to ascertain whether one or more characteristic number values for the sensor characteristic number are greater than the at least one reference value for the sensor characteristic number, that is to say in particular if one or more characteristic number values for the sensor characteristic number are greater than one or more reference values representing a reduced functionality of the sensor assembly and/or are greater than one or more reference values representing a malfunction of the sensor assembly and/or are greater than one or more reference values representing a Coriolis mass flow meter that is no longer intact, and to display a message signalling this.

7. The Coriolis mass flow meter as claimed in one of the preceding claims,

- wherein the transformer circuit is designed to ascertain, by reference to the, in particular digitalized, first vibration measurement signal, characteristic number values for at least one first useful component characteristic number, that is to say a characteristic number characterizing the first useful component and/or depending on the amplitude of the first useful component, that is to say in particular a peak value of the first useful component and/or an effective value of the first useful component and/or a rectified value of the first useful component and/or a vibration width of the first useful component, that is to say in particular to calculate characteristic number values for the at least one sensor characteristic number using characteristic number values ascertained for the first useful component characteristic number; and/or
- wherein the transformer circuit is designed to ascertain, by reference to the, in particular digitalized, second vibration measurement signal, characteristic number values for at least one second useful component characteristic number, that is to say a characteristic number characterizing the second useful component and/or depending on the amplitude of the second useful component, that is to say in particular a peak-peak value of the second useful component and/or an effective value of the second useful component and/or a rectified value of the second useful component and/or a vibration width of the second useful component, that is to say in particular to calculate characteristic number values for the at least one sensor characteristic number using characteristic number values ascertained for the second useful component characteristic number.

8. The Coriolis mass flow meter as claimed in one of the preceding claims, wherein the transformer circuit has a non-volatile electronic data memory which is designed to store digital data, in particular including without any operating voltage supplied, that is to say in particular to store one or more previously ascertained reference values for the sensor characteristic number.

9. The Coriolis mass flow meter as claimed in the preceding claim, wherein one or more reference values for the sensor characteristic number, in particular ascertained beforehand by the manufacturer of the Coriolis mass flow meter and/or during the manufacture of the Coriolis mass flow meter and/or during operation of the Coriolis mass flow meter, that is to say in particular one or more reference values representing a reduced functionality of the sensor assembly and/or that is to say one or more reference values representing a malfunction of the sensor assembly, are stored in the electronic data memory.

10. The Coriolis mass flow meter as claimed in one of the preceding claims,

- wherein, to detect a temperature of the sensing element at a temperature measurement point, the sensor assembly has at least one temperature sensor (61) which is designed to provide a temperature measurement signal, that is to say a measurement signal representing the temperature at the temperature measurement point, in particular with an electric voltage depending on the temperature and/or an electric current depending on the temperature;
- and wherein the transformer circuit is designed also to receive and evaluate the temperature measurement signal, that is to say to calculate the characteristic number values for the at least one sensor characteristic number (SK1) also by reference to the temperature measurement signal.

11. The Coriolis mass flow meter as claimed in one of the preceding claims, wherein the transformer circuit is designed to calculate, by reference to the first and second vibration measurement signals, characteristic number values for at least one second sensor characteristic number (SK2), in particular characterizing a functionality of the sensor assembly and/or a temporary adjustment of the sensor assembly and/or a deviation of the sensor assembly from a reference state, such that said second sensor characteristic number represents a distinction between the amplitude of the first and second useful components, that is to say in particular depends on the distinction and/or quantifies the distinction.

12. The Coriolis mass flow meter as claimed in the preceding claim, wherein the second sensor characteristic number (SK2) represents a difference between the amplitudes of the first and second useful components, this difference in particular being normalized to one of the amplitudes of the first and second useful components or normalized to a sum of the amplitudes of the first and second useful components or normalized to an average of the amplitudes of the first and second useful components.

**13.** The Coriolis mass flow meter as claimed in one of the preceding claims,

- wherein the measurement and control electronics have a first analog-to-digital converter for the first vibration measurement signal and a second analog-to-digital converter for the second vibration measurement signal; and/or
- wherein the first vibration sensor is formed by means of a first plunger coil and the second vibration sensor is formed by means of a second plunger coil; and/or
- wherein the exciter assembly has an, in particular electrodynamic and/or single, vibration exciter (41) to cause vibrations of the at least one measurement tube; and/or
- wherein the at least one vibration element is formed by means of at least one, in particular at least partially straight and/or at least partially arcuate, tube with an, in particular metallic, tube wall and a lumen surrounded thereby and is designed to be flowed through by substance to be measured and vibrated in the process.

**14.** The Coriolis mass flow meter as claimed in one of the preceding claims,

- wherein each of the first and second useful components has a phase angle depending on the mass flow;
- and wherein the transformer circuit is designed to calculate the mass flow measurement values by reference to a phase difference between the first and second useful components, that is to say a difference between the phase angle of the first useful component and the phase angle of the second useful component.

**Revendications**

**1.** Appareil de mesure de débit massique Coriolis, notamment un débitmètre massique / débitmètre massique Coriolis, destiné à la mesure d'un débit massique d'un produit fluide - notamment un gaz, un liquide ou une dispersion - lequel appareil de mesure comprend :

- un capteur qui présente au moins un élément vibrant, un dispositif d'excitation ainsi qu'un arrangement de capteurs, lequel capteur est conçu pour guider le produit, à savoir pour être traversé au moins temporairement par le produit ;
- ainsi qu'un circuit de transmetteur électronique couplé électriquement au capteur, à savoir aussi bien à son dispositif d'excitation qu'à son arrangement de capteurs, et formé notamment au moyen d'au moins un microprocesseur ;
- l'au moins un élément vibrant étant conçu pour être mis en contact avec le produit qui s'écoule et pour être mis en vibrations pendant ce temps, notamment avec au moins une fréquence de résonance ;
- le dispositif d'excitation étant conçu pour convertir l'énergie électrique qui lui est fournie en énergie mécanique provoquant des vibrations mécaniques forcées de l'élément vibrant ;
- le circuit de transmetteur étant conçu pour générer un signal d'excitation électrique et injecter ainsi de l'énergie électrique dans le dispositif d'excitation, de telle sorte que l'élément vibrant produise au moins en partie des vibrations utiles, à savoir des vibrations mécaniques forcées avec au moins une fréquence utile, à savoir une fréquence de vibration prédéfinie par le signal d'excitation électrique, laquelle fréquence correspond notamment à une fréquence de résonance du capteur, lesquelles vibrations sont appropriées pour provoquer des forces de Coriolis dépendant du débit massique dans le produit en écoulement ;
- l'arrangement de capteurs destiné à mesurer les vibrations mécaniques de l'au moins un élément vibrant, notamment ses vibrations utiles, comprenant un premier capteur de vibrations (51) électrodynamique et au moins un deuxième capteur de vibrations (52) électrodynamique, notamment de conception identique au premier capteur de vibrations (51),

-- le premier capteur de vibrations (51) étant conçu pour convertir les mouvements de vibration de l'au moins un élément vibrant au niveau d'un premier point de mesure en un premier signal de mesure de vibration électrique de l'arrangement de capteurs, de telle sorte que ledit premier signal de mesure de vibration comporte au moins une première composante utile, à savoir une composante de tension alternative

--- avec une fréquence correspondant à la fréquence utile,
--- et avec une amplitude dépendant de la fréquence utile et d'un premier flux magnétique ($\Phi 1$), à savoir un flux magnétique à travers le premier capteur de vibrations (51),

-- et le deuxième capteur de vibrations (52) étant conçu pour convertir les mouvements de vibration de l'au moins un élément vibrant, au niveau d'un deuxième point de mesure éloigné du premier point de mesure, en un deuxième signal de mesure de vibration électrique de l'arrangement de capteurs de telle sorte que ledit deuxième signal de mesure de vibration comporte au moins une deuxième composante utile, à savoir une composante de tension alternative

--- avec une fréquence correspondant à la fréquence utile,
--- et avec une amplitude dépendant de la fréquence utile et d'un deuxième flux magnétique ($\Phi2$), à savoir un flux magnétique à travers le deuxième capteur de vibrations (52),

- et le circuit de transmetteur étant conçu pour recevoir et évaluer le premier et le deuxième signal de mesure de vibration, à savoir pour déterminer, à l'aide du premier et du deuxième signal de mesure de vibration, des valeurs mesurées de débit massique, notamment numériques, représentant le débit massique ;
**caractérisé**
- **en ce que** le circuit de transmetteur est conçu pour calculer des valeurs caractéristiques pour au moins un indice de capteur caractérisant notamment un bon fonctionnement de l'arrangement de capteurs et/ou une variation dans le temps de l'arrangement de capteurs et/ou un écart de l'arrangement de capteurs par rapport à un état de référence, de telle sorte que ledit indice de capteur représente un taux de variation, notamment moyen ou instantané, taux avec lequel au moins l'une des amplitudes de la première et de la deuxième composante utile, notamment une différence entre les amplitudes de la première et de la deuxième composante utile, varie dans le temps, notamment dépend du taux de variation et/ou quantifie le taux de variation,
- **en en ce que** le circuit de transmetteur est conçu pour comparer une ou plusieurs valeurs caractéristiques pour l'indice de capteur respectivement avec une ou plusieurs valeurs de référence ($BK1_1$, $BK1_2$) déterminées pour l'indice de capteur, notamment par le fabricant du débitmètre massique Coriolis et/ou lors de la fabrication du débitmètre massique Coriolis, notamment avec une ou plusieurs valeurs de référence représentant une capacité de fonctionnalité réduite de l'arrangement de capteurs et/ou une ou plusieurs valeurs de référence représentant un dysfonctionnement de l'arrangement de capteurs et/ou une ou plusieurs valeurs de référence représentant un débitmètre massique Coriolis qui n'est plus intact.

**2.** Débitmètre Coriolis selon l'une des revendications précédentes,

- pour lequel le circuit de transmetteur est conçu pour recevoir et évaluer une instruction de démarrage initiant au moins la détermination des valeurs caractéristiques au moins pour le premier indice de capteur (SK1), à savoir pour détecter une entrée de l'instruction de démarrage et pour démarrer ensuite une détermination des valeurs caractéristiques pour le premier indice de capteur (SK1) ; et/ou
- pour lequel le circuit de transmetteur est conçu pour recevoir et évaluer une instruction d'arrêt empêchant au moins temporairement la détermination des valeurs caractéristiques pour le premier indice de capteur (SK1), à savoir pour détecter une entrée de l'instruction d'arrêt et arrêter ensuite au moins temporairement une détermination des valeurs caractéristiques pour le premier indice de capteur (SK1).

**3.** Débitmètre Coriolis selon l'une des revendications précédentes, pour lequel l'indice de capteur représente un taux de variation, notamment en ce qui concerne une valeur respective, le plus grand de deux taux de variation, notamment moyens ou instantanés, taux avec lesquels les amplitudes des première et deuxième composantes utiles varient dans le temps.

**4.** Débitmètre Coriolis selon l'une des revendications précédentes, pour lequel l'indice de capteur représente un taux de variation, notamment moyen ou instantané, taux avec lequel une différence, notamment une différence entre l'amplitude de la première composante utile et l'amplitude de la deuxième composante utile, varie dans le temps.

**5.** Débitmètre Coriolis selon l'une des revendications précédentes, pour lequel l'indice du capteur représente un taux de variation, notamment moyen ou instantané, taux avec lequel une différence entre les amplitudes des première et deuxième composantes utiles, notamment normalisée à l'une des amplitudes des première et deuxième composantes utiles, ou normalisée à une somme des amplitudes des première et deuxième composantes utiles, ou normalisée à une valeur moyenne des amplitudes des première et deuxième composantes utiles, varie dans le temps.

**6.** Débitmètre Coriolis selon l'une des revendications précédentes, pour lequel le circuit de transmetteur est conçu pour déterminer si une ou plusieurs valeurs caractéristiques pour l'indice de capteur est supérieure à l'au moins une valeur de référence pour l'indice de capteur, notamment si une ou plusieurs valeurs de l'indice de capteur est supérieure à une ou plusieurs valeurs de référence représentant une capacité de fonctionnement réduite de l'arrangement de capteurs et/ou est supérieure à une ou plusieurs valeurs de référence représentant un dysfonctionnement de l'arrangement de capteurs et/ou est supérieure à une ou plusieurs valeurs de référence représentant un débitmètre massique Coriolis qui n'est plus intact, et pour émettre un message signalant cela.

7. Débitmètre Coriolis selon l'une des revendications précédentes,

- pour lequel le circuit de transmetteur est conçu pour déterminer, à l'aide du premier signal de mesure de vibration, notamment numérisé, des valeurs caractéristiques pour au moins un premier indice de composante utile, à savoir un indice caractérisant la première composante utile et/ou dépendant de l'amplitude de la première composante utile, notamment à savoir une valeur de crête de la première composante utile et/ou une valeur effective de la première composante utile et/ou une valeur de redressement de la première composante utile et/ou une amplitude de vibration de la première composante utile, notamment pour calculer des valeurs caractéristiques pour l'au moins un indice de capteur en utilisant des valeurs caractéristiques déterminées pour le premier indice de composante utile ; et/ou
- pour lequel le circuit de transmetteur est conçu pour déterminer, à l'aide du deuxième signal de mesure de vibration, notamment numérisé, des valeurs caractéristiques pour au moins un deuxième indice de composante utile, à savoir un indice caractérisant la deuxième composante utile et/ou dépendant de l'amplitude de la deuxième composante utile, notamment à savoir une valeur de crête de la deuxième composante utile et/ou une valeur efficace de la deuxième composante utile et/ou une valeur de redressement de la deuxième composante utile et/ou une amplitude de vibration de la deuxième composante utile, notamment pour calculer des valeurs caractéristiques pour l'au moins un indice de capteur en utilisant des valeurs caractéristiques déterminées à l'aide du deuxième indice de composante utile.

8. Débitmètre Coriolis selon l'une des revendications précédentes, pour lequel le circuit de transmetteur comprend une mémoire de données électronique non volatile, laquelle est conçue pour conserver des données numériques, notamment en l'absence d'une tension de fonctionnement appliquée, à savoir pour mémoriser une ou plusieurs valeurs de référence déterminées au préalable pour l'indice de capteur.

9. Débitmètre Coriolis selon la revendication précédente, pour lequel une ou plusieurs valeurs de référence pour l'indice de capteur, notamment une ou plusieurs valeurs de référence représentant une capacité de fonctionnement réduite de l'arrangement de capteurs et/ou une ou plusieurs valeurs de référence représentant un dysfonctionnement de l'arrangement de capteurs, lesquelles valeurs sont déterminées au préalable, notamment par le fabricant du débitmètre massique Coriolis et/ou lors de la fabrication du débitmètre massique Coriolis et/ou lors du fonctionnement du débitmètre massique Coriolis, sont stockées dans la mémoire électronique de données.

10. Débitmètre Coriolis selon l'une des revendications précédentes,

- pour lequel l'arrangement de capteurs destiné à la mesure d'une température du capteur en un point de mesure de température comprend au moins un capteur de température (61), lequel est conçu pour mettre à disposition un signal de mesure de température, à savoir un signal de mesure représentant la température au point de mesure de température, notamment avec une tension électrique dépendant de la température et/ou un courant électrique dépendant de la température ;
- et pour lequel le circuit de transmetteur est conçu pour recevoir et évaluer également le signal de mesure de température, à savoir pour calculer les valeurs caractéristiques pour l'au moins un indice de capteur (SK1) également à l'aide du signal de mesure de température.

11. Débitmètre Coriolis selon l'une des revendications précédentes, pour lequel le circuit de transmetteur est conçu pour calculer, à l'aide des premier et deuxième signaux de mesure de vibration, des valeurs caractéristiques pour au moins un deuxième indice de capteur (SK2) caractérisant notamment un bon fonctionnement de l'arrangement de capteurs et/ou une variation dans le temps de l'arrangement de capteurs et/ou un écart de l'arrangement de capteurs par rapport à un état de référence, de telle sorte que ledit deuxième indice de capteur représente une différence entre l'amplitude de la première et de la deuxième composante utile, notamment qu'il dépend de la différence et/ou qu'il quantifie la différence.

12. Débitmètre Coriolis selon la revendication précédente, pour lequel le deuxième indice de capteur (SK2) représente une différence entre les amplitudes des première et deuxième composantes utiles, notamment normalisée à l'une des amplitudes des première et deuxième composantes utiles, ou normalisée à une somme des amplitudes des première et deuxième composantes utiles, ou normalisée à une valeur moyenne des amplitudes des première et deuxième composantes utiles.

13. Débitmètre Coriolis selon l'une des revendications précédentes,

- pour lequel l'électronique de mesure et de commande comporte un premier convertisseur analogique-numérique pour le premier signal de mesure de vibration ainsi qu'un deuxième convertisseur analogique-numérique pour le deuxième signal de mesure de vibration ; et/ou
- le premier capteur de vibrations étant formé au moyen d'une première bobine à noyau plongeur et le deuxième capteur de vibrations étant formé au moyen d'une deuxième bobine à noyau plongeur ; et/ou
- le dispositif d'excitation destiné à l'excitation en vibrations de l'au moins un tube de mesure présentant un excitateur de vibrations (41), notamment électrodynamique et/ou unique ; et/ou
- l'au moins un élément vibrant étant formé au moyen d'au moins un tube, notamment au moins partiellement droit et/ou au moins partiellement en forme d'arc de cercle, lequel tube comprenant une paroi de tube, notamment métallique, et un canal intérieur enveloppé par ladite paroi de tube, et lequel tube étant conçu pour être traversé par le produit et être mis en vibrations pendant ce temps.

14. Débitmètre Coriolis selon l'une des revendications précédentes,

- pour lequel chacune des première et deuxième composantes utiles présente respectivement un angle de phase dépendant du débit massique ;
- et pour lequel le circuit de transmetteur est conçu pour calculer les valeurs mesurées de débit massique à l'aide d'une différence de phase entre les première et deuxième composantes utiles, à savoir une différence entre l'angle de phase de la première composante utile et l'angle de phase de la deuxième composante utile.

#112

2L

200

ME

MW

100

#111

Fig. 1

Fig. 2

Fig. 3

Fig. 4b

Fig. 4a

Fig. 5b

Fig. 5a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 564682 A
- EP 816807 A
- EP 0644403 A1
- US 20020033043 A
- US 20060096390 A
- US 20070062309 A
- US 20070119264 A
- US 20080011101 A
- US 20080047362 A
- US 20080190195 A
- US 20080250871 A
- US 20100005887 A
- US 20100011882 A
- US 20100257943 A
- US 20110161017 A
- US 20110178738 A
- US 20110219872 A
- US 20110265580 A
- US 20110271756 A
- US 20120123705 A
- US 20130042700 A
- US 20160071639 A
- US 20160313162 A
- US 20160187176 A
- US 20170003156 A
- US 20170261474 A
- US 4491009 A
- US 4756198 A
- US 4777833 A
- US 4801897 A
- US 4876898 A
- US 4996871 A
- US 5009109 A
- US 5287754 A
- US 5291792 A
- US 5349872 A
- US 5705754 A
- US 5796010 A
- US 5796011 A
- US 5804742 A
- US 5831178 A
- US 5945609 A
- US 5965824 A
- US 6006609 A
- US 6092429 A
- US 6223605 B
- US 6311136 B
- US 6477901 B
- US 6505518 B
- US 6513393 B
- US 6651513 B
- US 6666098 B
- US 6711958 B
- US 6840109 B
- US 6883387 B
- US 6920798 B
- US 7017424 B
- US 7040181 B
- US 7077014 B
- US 7143655 B
- US 7200503 B
- US 7216549 B
- US 7296484 B
- US 7325462 B
- US 7360451 B
- US 7665369 B
- US 7792646 B
- US 7954388 B
- US 8201460 B
- US 8333120 B
- US 8695436 B
- WO 0019175 A
- WO 0034748 A
- WO 0102812 A
- WO 0102816 A
- WO 0171291 A
- WO 02060805 A
- WO 2005050145 A
- WO 2005093381 A
- WO 2007043996 A
- WO 2008013545 A
- WO 2008059262 A
- WO 2009148451 A
- WO 2010099276 A
- WO 2013092104 A
- WO 2014151829 A
- WO 2016058745 A
- WO 2017069749 A
- WO 2017123214 A
- WO 2017137347 A
- WO 2017143579 A
- WO 2018160382 A
- WO 2018174841 A
- WO 8505677 A
- WO 8802853 A
- WO 8803642 A
- WO 8900679 A
- WO 9421999 A

- WO 9503528 A
- WO 9516897 A
- WO 9529385 A
- WO 9529386 A
- WO 9802725 A
- WO 9940394 A
- WO 2018028932 A
- WO 2018007176 A
- WO 2018007185 A
- DE 102018102831
- US 5531126 A
- EP 2017067826 W